# EUROPEAN PATENT APPLICATION

(11) **EP 4 707 121 A1**
(43) Date of publication of application: **11.03.2026**
(21) Application number: 24864637.4
(22) Date of filing: 11.09.2024
(51) Int. Cl.: B62B 3/02, B65D 21/036

(54) **CART SUITABLE FOR STORAGE BOX**

(30) Priority: 11.09.2023 CN 202311167898; 10.01.2024 CN 202410042473; 10.01.2024 CN 202410040516
(71) Applicant: Nanjing Chervon Industry Co., Ltd., Nanjing, Jiangsu 211106 (CN)
(72) Inventor: CHEN, Cheng, Nanjing, Jiangsu 211106 (CN); ZHANG, Changning, Nanjing, Jiangsu 211106 (CN)
(74) Representative: Sun, Yiming
(86) International application number: PCT/CN2024/118109
(87) International publication number: WO 2025/055921

(57) **Abstract**

A cart applicable to a storage box includes a walking assembly including rotatable wheels; a base plate assembly including a base plate, where the base plate is connected to the walking assembly, and the base plate assembly is at least partially disposed on the upper side of the walking assembly; a first support plate having at least a first state relative to the base plate, where when the first support plate is in the first state, the first support plate is connected to the base plate with an interval through at least one storage box.

## Description

This application claims priority to Chinese Patent Application No. 202311167898.7 filed with the China National Intellectual Property Administration (CNIPA) on Sep. 11, 2023, Chinese Patent Application No. 202410042473.1 filed with the CNIPA on Jan. 10, 2024, and Chinese Patent Application No. 202410040516.2 filed with the CNIPA on Jan. 10, 2024, the disclosures of which are incorporated herein by reference in their entireties.

### TECHNICAL FIELD

The present application relates to a toolbox system, for example, a cart applicable to a storage box.

### BACKGROUND

Carts exist in the related art. A user generally needs to carry tools to be used when going to a workplace. To make it convenient for the user to carry and transport the tools, the user generally stores the tools in a storage box, where a charger, a battery pack, tool attachments, tools, and the like can be placed in the storage box. When the tools and the like are all placed in the storage box, the storage box is certainly very heavy during transportation, which is difficult for the user to transport. Therefore, the user often requires a cart to transport the storage box. However, most carts currently available on the market are bulky and cannot facilitate the transportation by users.

This part provides background information related to the present application, and the background information is not necessarily the existing art.

### SUMMARY

An object of the present application is to solve or at least alleviate part or all of the preceding problems. Therefore, an object of the present application is to provide a cart that can be switched from a single layer to at least two layers by use of a storage box.

To achieve the preceding object, the present application adopts the technical solutions below.

A cart applicable to a storage box includes a walking assembly including rotatable wheels; and a base plate assembly including a base plate, where the base plate is connected to the walking assembly, and the base plate assembly is at least partially disposed on the upper side of the walking assembly. The cart further includes a first support plate having at least a first state relative to the base plate, where when the first support plate is in the first state, the first support plate is connected to the base plate through at least one storage box.

In some examples, the first support plate has a second state and a third state relative to the base plate; when the first support plate is in the second state, the first support plate is mounted to the base plate, and the first support plate is at least partially in contact with the base plate; and when the first support plate is in the third state, the first support plate is separated from the base plate.

In some examples, the cart further includes a pull rod assembly connected to the base plate assembly, the pull rod assembly includes a pull rod connected to the base plate, the pull rod is movable relative to the base plate, and the pull rod has at least two states relative to the base plate, which are a stored state and a used state, respectively; when the pull rod is in the stored state, the pull rod is at least partially within the base plate, and the pull rod is lower than an upper surface of the base plate; and when the pull rod is in the used state, the pull rod is connectable to the first support plate.

In some examples, the pull rod further has a separated state relative to the base plate, and when the pull rod is in the separated state, the pull rod is allowed to be separated from the base plate.

In some examples, three states of the first support plate relative to the base plate are each configured to be used in combination with two states of the pull rod relative to the base plate.

In some examples, the cart further includes a pull rod assembly connected to the base plate assembly, the pull rod assembly includes a pull rod connected to the base plate, and the first support plate is connected to the base plate with an interval through the at least one storage box and the pull rod.

In some examples, the cart further includes a pull rod assembly connected to the base plate assembly, the pull rod assembly includes a pull rod connected to the base plate, the cart further includes a first connection assembly for connecting the pull rod to the first support plate, and the first connection assembly includes a first connector and a second connector; when the first connector is connected to the second connector, the first support plate is fixedly connected to the pull rod; and when the first connector is separated from the second connector, the first support plate is separated from the pull rod, and the first support plate and the pull rod are movable relative to the base plate.

In some examples, the first connection assembly further includes a fastener capable of mating with the first connector and the second connector, the first connector is connected to the pull rod, the second connector is connected to the first support plate, the first connector is formed with first connection holes, the second connector is formed with second connection holes, and the fastener penetrates through the first connection holes and the second connection holes to connect the first support plate to the pull rod.

In some examples, the cart further includes a pull rod assembly connected to the base plate assembly, and the pull rod assembly includes a pull rod connected to the base plate and a holder detachably connected to the pull rod.

In some examples, the first support plate is connected to the base plate through at least two storage boxes.

In some examples, the cart further includes a second connection assembly, and the storage box is mounted onto the base plate through the second connection assembly.

In some examples, the first support plate is mounted onto the storage box through the second connection assembly.

In some examples, the cart further includes a second connection assembly, and the first support plate is connected to the base plate through the second connection assembly.

In some examples, the cart further includes at least one external hanger, each of the at least one external hanger includes a mounting portion and a connection portion, the mounting portion is configured to detachably connect an item, and the connection portion is configured to be mounted onto the cart and/or the storage box.

In some examples, the cart further includes an external hanger assembly including the at least one external hanger and an intermediate piece, where an external hanger of the at least one external hanger is mounted onto a connection section of the storage box and/or the first support plate through the intermediate piece.

In some examples, the cart further includes an external hanger assembly including fasteners, where the fasteners penetrate through the connection portion to mount an external hanger of the at least one external hanger onto the first support plate.

In some examples, the item is attractable to an external hanger of the at least one external hanger.

In some examples, an external hanger of the at least one external hanger is mounted to the outer perimeter of the first support plate.

A cart applicable to a storage box includes a walking assembly including rotatable wheels; and a base plate assembly including a base plate, where the base plate is connected to the walking assembly, and the base plate assembly is at least partially disposed on the upper side of the walking assembly. The cart further includes a first support plate, where the storage box is detachably connected to the base plate, the first support plate is detachably connected to the base plate through the storage box, and a space for storing items is formed on the upper side of the first support plate.

A cart applicable to a storage box includes a walking assembly including rotatable wheels; and a base plate assembly including a base plate, where the base plate is connected to the walking assembly, and the base plate assembly is at least partially disposed on the upper side of the walking assembly. The cart further includes a first support plate connected to the base plate through at least one storage box, where the storage box is formed with an opening that is openable and closable.

In some examples, the walking assembly further includes an intermediate rod connecting wheels of the rotatable wheels, the wheels are rotated relative to the base plate, and during rotation of the wheels, the wheels have at least a traveling state and a folded state; when the wheels are in the traveling state, the wheels are allowed to drive the base plate to move; and when the wheels are in the folded state, the wheels are stored on the lower side of the base plate. The cart further includes a locking device configured to control the wheels to switch between the traveling state and the folded state. The locking device includes an adapter connected to the base plate, where the adapter includes an adaption portion, and the adapter is configured to be connected to the intermediate rod after being rotated by a preset angle; and a positioning pin connected to the intermediate rod, where the positioning pin abuts against the adapter after the adapter is rotated by the preset angle, and when the positioning pin abuts against the adaption portion, the wheels remain in the current state.

In some examples, the locking device further includes a limiting assembly, the limiting assembly includes the adapter and a base to which the adapter is rotatably connected, and the base mates with the adapter to prevent rotation of the intermediate rod.

In some examples, the locking device further includes a locking assembly, the locking assembly includes a cam and a clasp, the cam is rotatably connected to the base, the clasp is connected to the cam, and the clasp mates with the cam to enable the adapter to be connected to the base.

In some examples, the intermediate rod is provided with two positioning pins which are a first positioning pin and a second positioning pin, and the base is provided with a first stop portion and a second stop portion which mate with the positioning pins; when the wheels are in the traveling state, the first positioning pin is in contact with the adaption portion, and the second positioning pin is in contact with the first stop portion; and when the wheels are in the folded state, the first positioning pin is in contact with the second stop portion, and the second positioning pin is in contact with the adapter.

In some examples, the first positioning pin and the second positioning pin are arranged in a circumferential direction of the intermediate rod.

In some examples, the intermediate rod is rotated to a preset position, and the adapter is rotated by the preset angle so that the first positioning pin is in contact with the adaption portion and the second positioning pin is in contact with the first stop portion, and a clasp is in contact with and abuts against the adapter, so that the wheels are switched to the traveling state.

In some examples, the adaption portion is a hole for the positioning pin to partially penetrate through.

In some examples, the adapter further includes a guide portion configured to guide the positioning pin to slide into the adaption portion.

In some examples, the walking assembly further includes an intermediate rod connecting wheels of the rotatable wheels, the wheels are rotated relative to the base plate, and during rotation of the wheels, the wheels have at least a traveling state and a folded state; when the wheels are in the traveling state, the wheels are allowed to drive the base plate to move; and when the wheels are in the folded state, the wheels are stored on the lower side of the base plate. The cart further includes a locking device configured to control the wheels to switch between the traveling state and the folded state. The locking device includes an abutting member including a cam portion, where the abutting member is operated to rotate relative to the base plate, and during rotation, the abutting member abuts against an adaption portion on the intermediate rod to enable the wheels to be in the traveling state.

In some examples, the locking device further includes a locking assembly, the locking assembly includes the abutting member, a handle rotating together with the abutting member, and a clip configured to fix the handle, and the clip is connected to the base plate.

In some examples, the handle is operated to rotate the abutting member until the cam portion is in contact with the adaption portion, and the handle continues to be rotated so that the handle is connected to the clip to enable the wheels to be switched to the traveling state.

In some examples, the locking device further includes a positioning member, the positioning member is sleeved on the outer perimeter of the intermediate rod and rotates together with the intermediate rod, and the positioning member is formed with the adaption portion.

In some examples, the connection device further includes a limiting assembly for guiding the intermediate rod to a preset position, the limiting assembly includes a guide member, the guide member is connected to the abutting member and rotates together with the abutting member, and when the wheels are in the traveling state, the guide member is at least partially in contact with the positioning member.

In some examples, the connection device further includes a limiting assembly for guiding the intermediate rod to a preset position, the limiting assembly includes a guide member, the guide member is connected to the abutting member and rotates together with the abutting member, and when the wheels are in the traveling state, the guide member at least partially overlaps the abutting member in a direction perpendicular to an extension direction of the intermediate rod.

In some examples, the handle is operated to rotate the guide member and the abutting member, during rotation of the guide member and the abutting member, the guide member is first in contact with the positioning member and guides the intermediate rod to the preset position, the guide member and the abutting member continue to be rotated until the cam portion is in contact with the positioning member, and the handle continues to be rotated so that the handle is connected to the clip to enable the wheels to be switched to the traveling state.

The present application has the following benefit: the cart can be switched from a single layer to at least two layers by use of the storage box in the present application, increasing the diversity of carts.

### BRIEF DESCRIPTION OF DRAWINGS

FIG. 1 is a perspective view of a cart applicable to a storage box in the present application.
FIG. 2 is a perspective view of the cart in FIG. 1 from another angle.
FIG. 3 is a perspective view of the cart in FIG. 1 from another angle.
FIG. 4 is a perspective view of the cart in FIG. 1 with items removed.
FIG. 5 is a perspective view of the cart in FIG. 4 from another angle.
FIG. 6 is a perspective view illustrating that the cart in FIG. 4 is separated from some external hangers, where the cart is in a first state.
FIG. 7 is a perspective view illustrating that a first support plate in FIG. 6 is separated from a pull rod and a storage box in FIG. 6, where the cart is in a third state.
FIG. 8 is a perspective view illustrating that a first support plate in FIG. 6 is directly connected to a base plate in FIG. 6, where the cart is in a second state and wheels are in an unfolded state.
FIG. 9 is a perspective view of the cart in FIG. 6 with a first support plate removed, where the cart is in a third state, a pull rod is in a used state, and a drive is in a connection state.
FIG. 10 is a perspective view of the cart when the pull rod in FIG. 9 is in a stored state and the drive in FIG. 9 is in a hidden state.
FIG. 11 is a perspective view of the cart in FIG. 1, with a pull rod in a stored state, the cart in a second state, and wheels in a folded state.
FIG. 12 is a perspective view of the cart in FIG. 11 from another angle, where the wheels are in the folded state.
FIG. 13 is an exploded view of a locking device of the cart in FIG. 11.
FIG. 14 is a perspective view of a first support plate in FIG. 1.
FIG. 15 shows a second example in which a first support plate is connected to a base plate through storage boxes.
FIG. 16 is a perspective view of a cart in FIG. 15 with items removed.
FIG. 17 is a perspective view illustrating that a first support plate in FIG. 16 is separated from a base plate in FIG. 16.
FIG. 18 is a perspective view of a second type of first support plate in FIG. 15.
FIG. 19 is a perspective view illustrating that the pull rod in FIG. 9 is in a separated state.
FIG. 20 is a perspective view of another feasible example of a locking device of the present application, where wheels are in a traveling state and clasps are in a locking state.
FIG. 21 is a perspective view of part of the structure of a cart in FIG. 20, where wheels are in a folded state and a clasp is in the locking state.
FIG. 22 is a perspective view of part of the structure of a cart in FIG. 20, where wheels are in a traveling state and a clasp is in a release state.
FIG. 23 is a perspective view of part of the structure of a cart in FIG. 20, where a clasp is in a release state and an adapter is in a second state.
FIG. 24 is a partial enlarged view of the perspective view of FIG. 23.
FIG. 25 is a perspective view of another feasible example of a locking device of the present application.
FIG. 26 is a perspective view of part of the structure of a cart in FIG. 25, where wheels are in a folded state.
FIG. 27 is a sectional view of the cart shown in FIG. 26.
FIG. 28 is a perspective view of part of the structure of a cart in FIG. 25, where wheels are in a traveling state.
FIG. 29 is an exploded view of the cart shown in FIG. 26.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

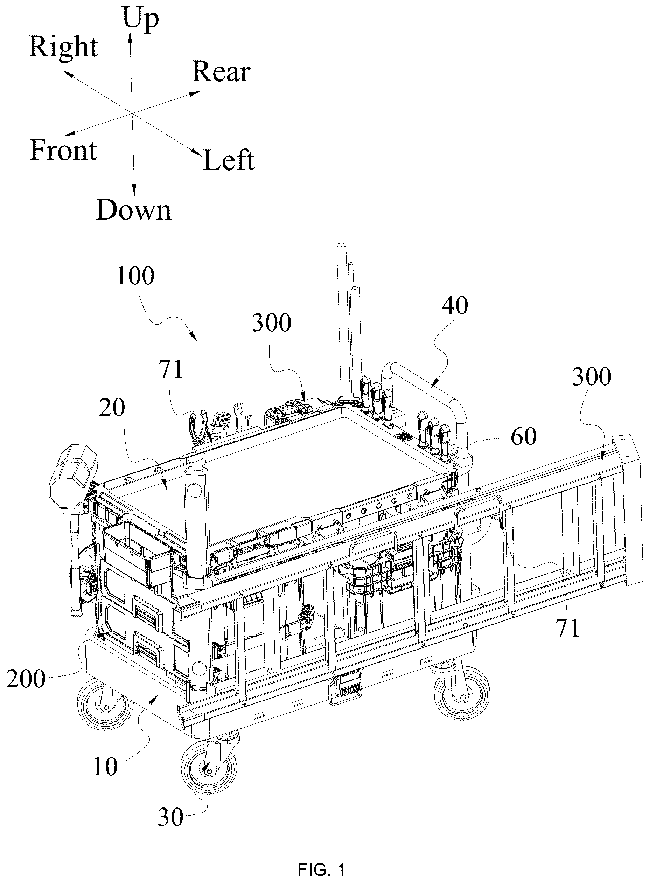

FIG. 1 shows a cart 100 applicable to the transportation and placement of a storage box 200. From the viewpoint of working conditions, a user generally needs to carry items 300 to be used when going to a workplace. To make it convenient for the user to carry and transport the items 300, the user generally stores the items 300 in the storage box 200. The user may place, hang, or fix the storage box 200 or tools on or to the cart 100 so that the user may use the cart 100 to transport the storage box 200 to the workplace, place the tools in the workplace, or mount a workbench on the cart 100, where the workbench serves as a temporary workbench for placing a machine or is set as a temporary office space.

The items 300 refer to one or a combination of an attachment, a tool, a charging device, a power supply device, a lighting device, an accessory box/bag, a toolbox, an auxiliary tool, and the like.

To clearly describe the structure of the cart 100 and working principles thereof, up, down, front, rear, left, and right are defined, as shown in FIG. 1. It is to be noted that, unless otherwise specified, up and down, front and rear, and left and right are described below with respect to a stationary state shown in FIG. 1.

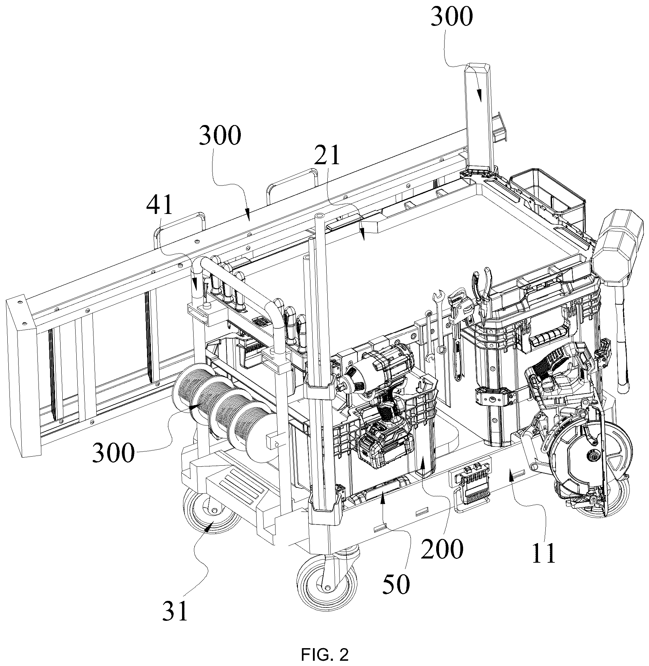

As shown in FIGS. 1 to 5, the cart 100 includes a base plate assembly 10, a first support assembly 20, a walking assembly 30, and a pull rod assembly 40.

The walking assembly 30 is connected to the base plate assembly 10. In an up and down direction, the walking assembly 30 is disposed at the base plate assembly 10, the walking assembly 30 includes one or more wheels 31, and the walking assembly 30 enables the base plate assembly 10 to move relative to the ground. The user may push or pull the pull rod assembly 40 so that the wheels 31 rotate relative to the ground and drive the base plate assembly 10 to move. It is to be noted that the ground is not limited to the ground surface and may refer to another contact surface for placing the cart 100.

The base plate assembly 10 is at least partially disposed on the walking assembly 30. The base plate assembly 10 includes a base plate 11, and the wheels 31 are substantially mounted at the lower end of the base plate 11. The base plate 11 is configured for stacking the storage box 200, the attachment, the tool, the charging device, the power supply device, the lighting device, and the like. Of course, the attachment, the tool, the charging device, the power supply device, and the lighting device may be placed in the storage box 200, and then the storage box 200 may be placed on the base plate 11.

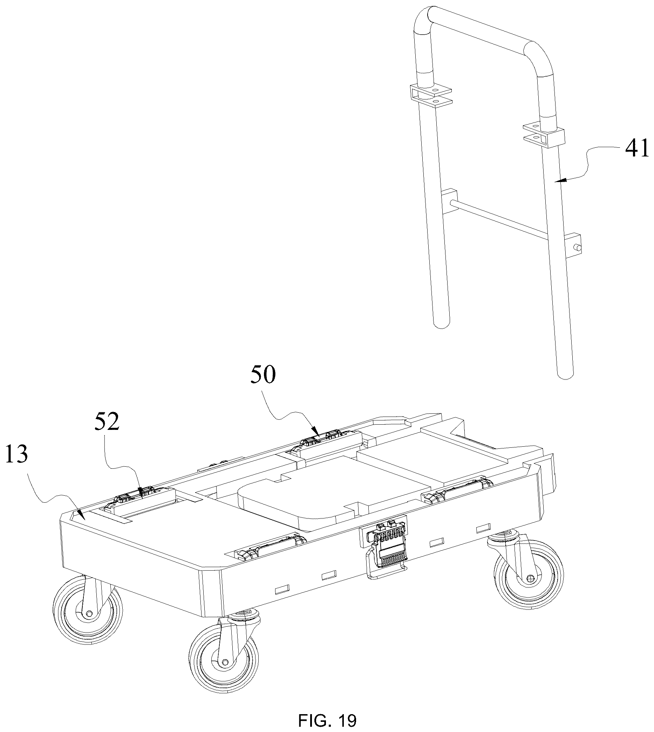

The pull rod assembly 40 is connected to the base plate assembly 10. The pull rod assembly 40 includes a pull rod 41, the pull rod 41 includes a first connecting rod 42 and a second connecting rod 43 opposite to each other and substantially extending along a direction of a straight line and a grip rod 44 connecting an end of the first connecting rod 42 to an end of the second connecting rod 43, the user holds the grip rod 44 to drive the cart 100 to move, and the other end of the first connecting rod 42 and the other end of the second connecting rod 43 are pivotally connected to the base plate 11. The pull rod 41 is rotatably connected to the base plate 11. During rotation, the pull rod 41 has at least a stored state and a used state. The base plate 11 is formed with an upper recess 12. When the pull rod 41 is in the stored state, the pull rod 41 is stored in the upper recess 12, and the pull rod 41 is lower than an upper surface 13 of the base plate 11. When the pull rod 41 is in the used state, the pull rod 41 and the base plate 11 are at a certain angle. The specific angle between the pull rod 41 and the base plate 11 is not limited, and the pull rod 41 may rotate relative to the base plate 11 steplessly or in a gear adjustment manner. In this example, the pull rod 41 rotates relative to the base plate 11 steplessly, that is, the user may rotate the pull rod 41 as required by the user. In other examples, the pull rod 41 further has a separated state relative to the base plate 11, that is, the pull rod 41 may be detached from the base plate 11, as shown in FIG. 19.

The first support assembly 20 is disposed on the upper side of the base plate assembly 10. The first support assembly 20 includes a first support plate 21 disposed at the upper end of the base plate 11. The first support plate 21 has at least a first state, a second state, and a third state relative to the base plate 11. When the first support plate 21 is in the first state, the first support plate 21 is connected to the base plate 11 through at least one storage box 200. When the first support plate 21 is in the second state, the first support plate 21 is directly mounted on the base plate 11. When the first support plate 21 is in the third state, the first support plate 21 is separated from the base plate 11. In this manner, the user can select different states according to actual working conditions, greatly increasing the diversity of functions of the cart 100. Of course, the user may dispose a second support assembly, a third support assembly, or the like on the first support plate 21 through the storage box 200. Additionally, when the first support plate 21 is in any one state, the state can be used in combination with three states of the pull rod 41 relative to the base plate 11 so that the user can select use states according to the current working condition, facilitating operations. Of course, some structures may not be present.

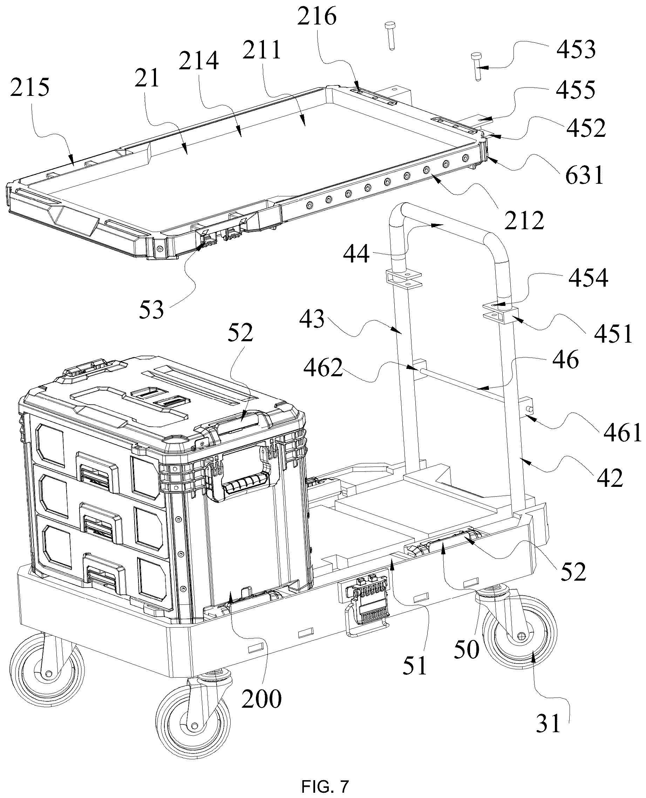

In conjunction with FIG. 7, the cart 100 further includes a first connection assembly 45 configured to connect the pull rod assembly 40 to the first support assembly 20 and to fixedly connect the pull rod 41 to the first support plate 21. The user may mount the first support plate 21 above the base plate 11 through the first connection assembly 45 and the storage box 200. To ensure the connection stability between the pull rod 41 and the first support plate 21, the first connection assembly 45 may be mounted on each of the first connecting rod 42 and the second connecting rod 43, where one first connection assembly 45 mounted on the first connecting rod 42 is described herein.

When the user needs to switch the cart 100 to the first state, as a feasible example, the user may mount the first support plate 21 onto the base plate 11 through the first connection assembly 45 and the storage box 200. The first connection assembly 45 includes a first connector 451 and a second connector 452. When the first connector 451 is connected to the second connector 452, the first support plate 21 is fixedly connected to the first connecting rod 42. When the first support plate 21 is separated from the first connecting rod 42, the first support plate 21 is separated from the first connecting rod 42, and the pull rod 41 may rotate relative to the base plate 11. The first connector 451 is connected to or formed on the first connecting rod 42, the second connector 452 is connected to or formed on the first support plate 21, and the first connector 451 and the second connector 452 may be connected in multiple manners, that is, the first connector 451 and the second connector 452 may be connected through one or a combination of threads, a mortise-and-tenon joint, a screw, a latch, and a snap-fit. A specific connection manner between the first connector 451 and the second connector 452 is not limited as long as the first connector 451 and the second connector 452 can be connected and remain relatively fixed.

In this example, the first connection assembly 45 further includes a fastener 453, and the first connector 451 is connected to the second connector 452 by the fastener 453. As a specific example, the first connector 451 is formed on the first connecting rod 42, the second connector 452 is formed on the first support plate 21, the first connector 451 is formed with first connection holes 454 through the first connector 451, and the second connector 452 is formed with second connection holes 455 through the second connector 452. When the user needs to fixedly connect the pull rod 41 to the first support plate 21, the first connection holes 454 are aligned with the second connection holes 455, and then the fastener 453 penetrates through the first connection holes 454 and the second connection holes 455 so that the first connector 451 is fixedly connected to the second connector 452. When the user needs to separate the pull rod 41 from the first support plate 21, the user simply pulls the fastener 453 out from the first connection holes 454 and the second connection holes 455, and the first connector 451 and the second connector 452 can move freely relative to each other so that the user can separate the pull rod 41 from the first support plate 21 and perform state switching. In this example, the fastener 453 is simply inserted or removed so that the first support plate 21 can be fixed to or separated from the pull rod 41 so that the structure is simple and convenient for the user to use. When the first connector 451 and the second connector 452 are fixed by the fastener 453, the grip rod 44 of the pull rod 41 is located above the first support plate 21 along the up and down direction, making it convenient for the user to hold the grip rod 44 to push/pull the cart 100.

With continued reference to FIG. 7, the cart 100 further includes a holder 46 detachably connected to the pull rod 41. The holder 46 may be configured for a cable to be sleeved on. Of course, other items 300 may be hung on the holder 46. The holder 46 is specifically an elongated rod, where one end of the holder 46 is connected to the first pull rod 41 and the other end of the holder 46 is connected to the second pull rod 41. The holder 46 is connected to the first connecting rod 42 and/or the second connecting rod 43 through one or a combination of a snap-fit, threads, a screw, a mortise-and-tenon joint, and a latch. In this example, the holder 46 is connected to the first connecting rod 42 and the second connecting rod 43 through latch connections. The first connecting rod 42 is connected to a first insertion portion 461, the second connecting rod 43 is connected to a second insertion portion 462, the first insertion portion 461 and the second insertion portion 462 correspond to each other, and the first insertion portion 461 and the second insertion portion 462 are provided with penetrating through holes. The holder 46 may penetrate through the through holes on the first insertion portion 461 and the second insertion portion 462 so that the holder 46 is directly connected to the pull rod 41. When the user needs to use the holder 46, as an example, the user may penetrate one end of the holder 46 through one through hole, sleeve the cable on the holder 46, and penetrate the one end of the holder 46 through the other through hole so that the cable can be connected to the holder 46. Of course, the cable here may be another item 300. As another example, two ends of the holder 46 directly penetrate through the through holes on the first connecting rod 42 and the second connecting rod 43, and the user may hang the item 300 on the holder 46 with a hook. When the user needs to use the item 300, the user may directly take the item 300 off the holder 46. In other examples, the user may detach the holder 46 from the pull rod 41 and mount the holder 46 onto the pull rod 41 when some items 300 need to be hung or sleeved on the holder 46. This arrangement can not only increase a space for placing the items 300 on the cart 100 but also make it convenient for the user to access or store the items 300. Moreover, the structure is simple and facilitates operations.

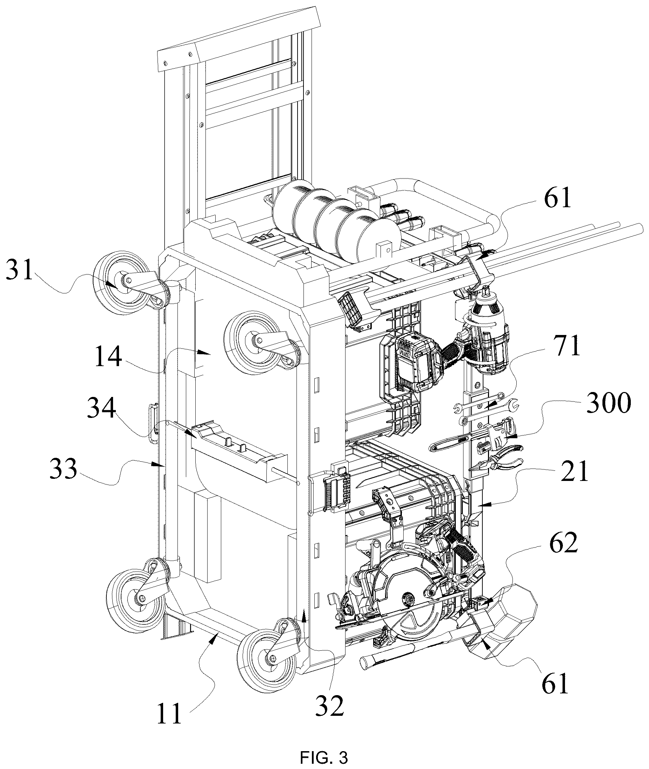

Referring to FIG. 3, the walking assembly 30 includes four wheels 31 mounted at the lower end of the base plate 11, and the wheels 31 can be driven to rotate relative to the base plate 11. During rotation, the wheels 31 have a folded state and an unfolded state. When the wheels 31 are in the folded state, the wheels 31 are located within a lower recess 14 of the base plate 11, and the wheels 31 are separated from the ground. When the wheels 31 are in the unfolded state, the wheels 31 are in contact with the ground. In this manner, when the user wants to use the cart 100, the user simply switches the wheels 31 to the unfolded state so that the user can push the wheels 31 to drive the cart 100 to walk. When the user wants to store the cart 100, the user simply switches the wheels 31 to the folded state so that the cart 100 can be stored in a storage place or placed in a pickup truck for transportation.

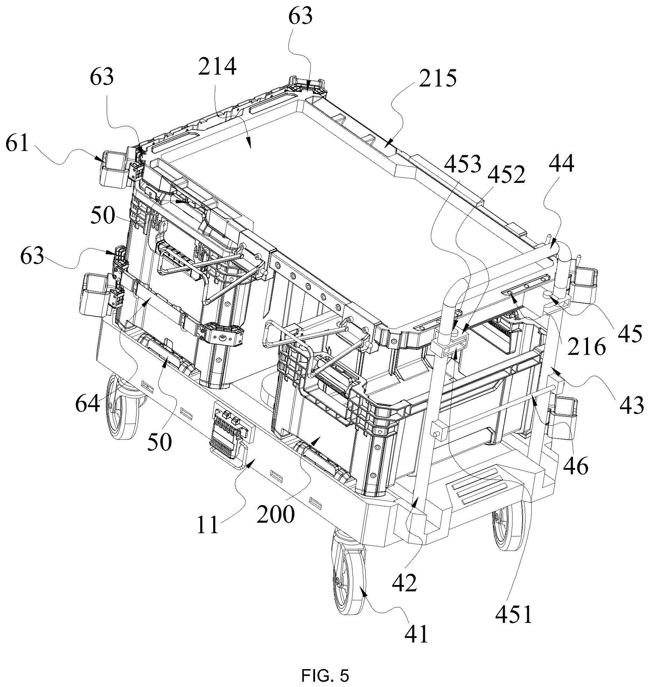

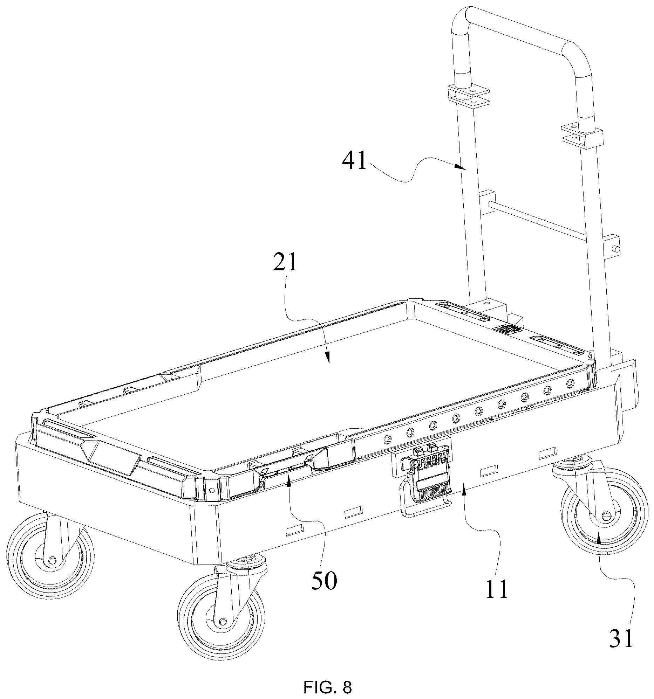

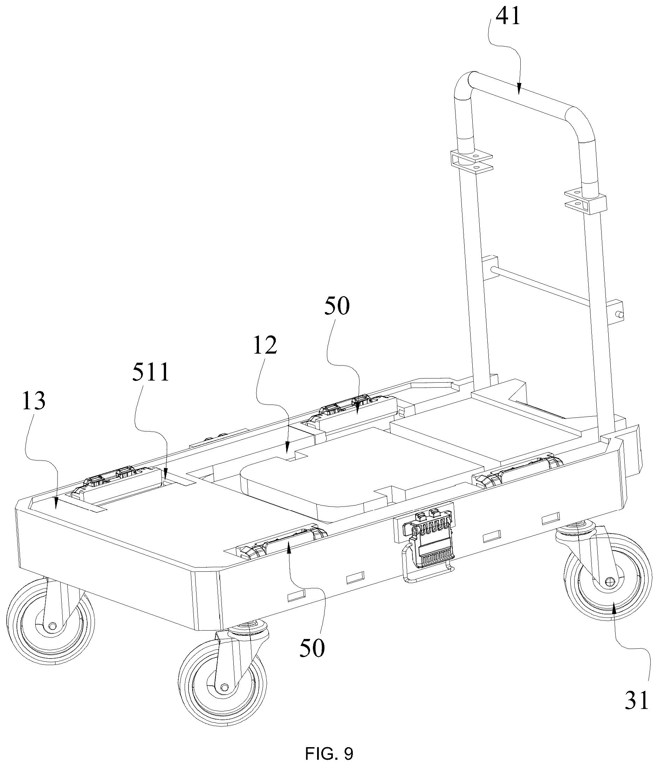

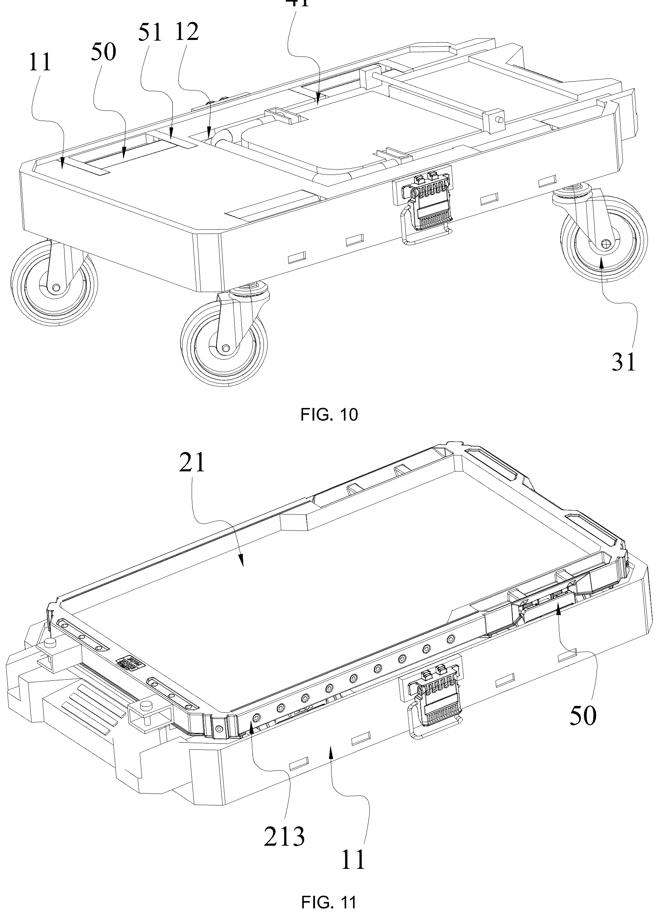

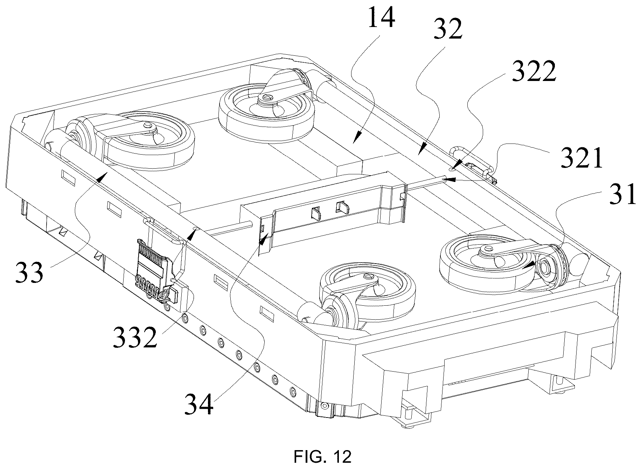

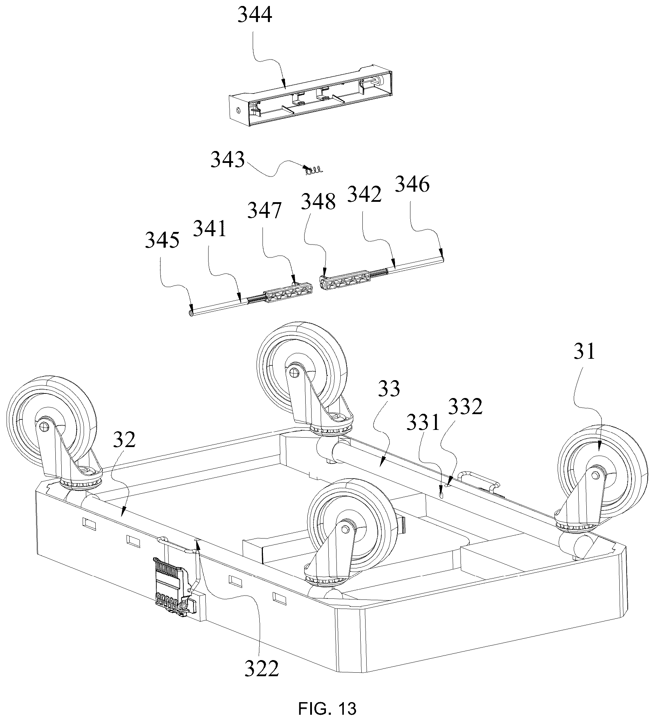

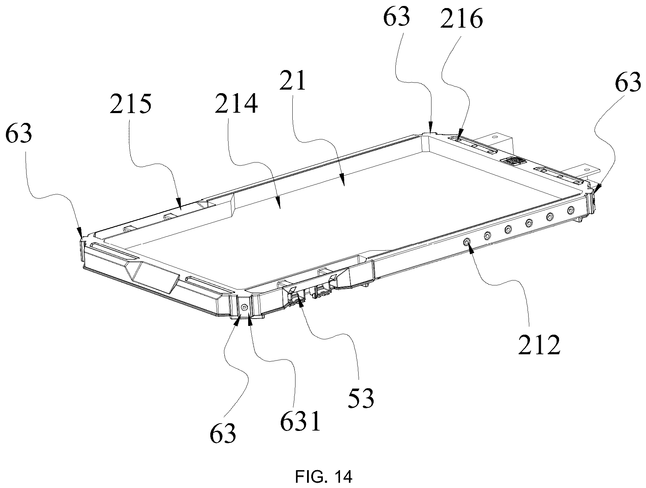

Referring to FIGS. 5 to 14, the cart 100 further includes a second connection assembly 50 configured to connect the storage box 200 to the base plate 11 and to connect the first support plate 21 to the storage box 200. To ensure connection stability, second connection assemblies 50 may be symmetrically mounted at two ends of each of the base plate 11, the first support plate 21, and the storage box 200. Here, one second connection assembly 50 is described in detail as an example. Second connection assemblies 50 disposed opposite may be referred to as a set of connection devices.

The second connection assembly 50 includes a base 51, a drive 52, and an adapter 53. The drive 52 is mounted on the base 51, the drive 52 is movable relative to the base 51, and the drive 52 can be separated from or connected to the adapter 53. The base 51 may be connected to or formed on the cart 100. It is to be understood that the base 51 may be connected to or formed on the base plate 11. As a feasible example, the base 51 is directly formed on the base plate 11, and multiple bases 51 may be provided on the base plate 11. That is to say, multiple sets of connection devices may be mounted on the base plate 11. In this manner, the user can connect multiple storage boxes 200 to the base plate 11.

The drive 52 can move relative to the base 51, that is, the drive 52 has at least two states relative to the base 51, which are a hidden state and a connection state, respectively. When the drive 52 is in the connection state, the drive 52 is at a mating position where the drive 52 can mate with the adapter 53. In this case, the drive 52 can be connected to the adapter 53. When the drive 52 is in the hidden state, the drive 52 is at a hidden position where the drive 52 is removed from the mating position. In this example, the drive 52 is connected to the base plate 11, and the adapter 53 is connected to or formed on the storage box 200 and/or the first support plate 21. As an example, the adapter 53 is formed on the storage box 200. When the drive 52 is in the connection state, the drive 52 can be locked to the adapter 53 so that the storage box 200 can be fixedly connected to the base 51. When the drive 52 is in the hidden state, the drive 52 is separated from the adapter 53, and a top surface of the drive 52 along the up and down direction is lower than or flush with the upper surface 13 of the base 51. In this manner, when the user wants to mount the storage box 200 on the base plate 11, the user simply switches the drive 52 to the connection state, and when the user does not need to use the second connection assembly 50, the user simply switches the drive 52 to the hidden state so that the user can stack other items 300 on the base plate 11 without damaging the second connection assembly 50, and the second connection assembly 50 does not interfere with the items 300. That is, the cart 100 has increased diversity of functions and is convenient for the user to use. It is to be noted that the adapter 53 is not necessarily formed on the storage box 200 and may be formed on another item 300 as long as the adapter 53 can be connected to the drive 52.

Specifically, the base 51 is formed with an accommodation cavity 511, and the drive 52 may be disposed in the accommodation cavity 511. The drive 52 may be accommodated in the accommodation cavity 511, the drive 52 is pivotally connected to the base 51, and the drive 52 can rotate relative to the base 51. When the user needs to switch the drive 52 to the connection state, the user simply turns the drive 52 upward to rotate the drive 52 to the mating position. When the user does not need to use the second connection assembly 50, the user simply turns the drive 52 downward to rotate the drive 52 to the hidden position, that is, flips the drive 52 into the accommodation cavity 511.

The first support plate 21 may be mounted on the base plate 11. It is to be understood that the first support plate 21 may be spaced apart from the base plate 11; of course, the first support plate 21 may be directly connected to the base plate 11. The first support plate 21 is connected to the base plate 11 with an interval, that is, the first support plate 21 is connected to the base plate 11 through the first connection assembly 45 and the storage box 200. Along the up and down direction, the storage box 200 is provided with two sets of connection devices. The storage box 200 has an upper top surface and a lower bottom surface opposite to each other, one set of connection devices may be mounted on the upper top surface of the storage box 200, and one set of connection devices may be mounted on the lower bottom surface of the storage box 200. The adapter 53 may be mounted on the lower bottom surface of the storage box 200, and the drive 52 may be mounted on the base plate 11. The user may connect the storage box 200 to the base plate 11 by connecting the adapter 53 to the drive 52. The drive 52 may be mounted on the upper top surface of the storage box 200, the adapter 53 may be mounted at the lower end of the first support plate 21, and the adapter 53 on the first support plate 21 may be connected to the drive 52 on the storage box 200 so that the first support plate 21 is mounted to the upper end of the storage box 200. In this case, the first support plate 21 is in the first state. In this example, the pull rod 41 and the storage box 200 are used to replace support legs between the first support plate 21 and the base plate 11. In this manner, during actual use, the user may directly use the first support plate 21, the storage box 200, and the pull rod 41 to change a single-layer cart 100 to a double-layer cart 100, that is, one storage space is formed on the upper side of each of the base plate 11 and the first support plate 21 so that the user can directly place the items 300 on the base plate 11 and the first support plate 21 without additionally mounting the support legs, thereby simplifying the structure and facilitate operations of the user.

The first support plate 21 may be directly mounted onto the base plate 11 through the second connection assembly 50. That is, the adapter 53 on the first support plate 21 may be directly connected to the drive 52 on the base plate 11 so that the first support plate 21 can be directly connected to the base plate 11. In this case, the first support plate 21 is in the second state, that is, the cart 100 changes to the single-layer cart 100, and the user can directly place the items 300 on the first support plate 21. In another example of the cart 100, the first support plate 21 is not mounted on the base plate 11, that is to say, the first support plate 21 is in the third state. That is, only the base plate 11 forms the cart 100 with the pull rod 41, the user may place the items 300 on the base plate 11, and the user pushes/pulls the cart 100 through the pull rod 41. As another example in which the first support plate 21 is not mounted, the pull rod 41 may be stored in the upper recess 12 so that the cart 100 changes to a platform cart 100. The user may directly place the items 300 on the base plate 11, for example, stack multiple storage boxes 200, and the user may directly push the storage box 200 to drive the wheels 31 to move. To sum up, according to the current working condition, the user can quickly and conveniently switch the cart 100 to a configuration suitable for the current working condition to facilitate use.

The cart 100 may also be connected to an external hanger assembly 60 configured to connect the items 300 to the cart 100 and/or the storage box 200. The external hanger assembly 60 includes at least one external hanger 61, the external hanger 61 includes a mounting portion 611 and a connection portion 612, the mounting portion 611 is configured to detachably connect the item 300, and the connection portion 612 is configured to be mounted onto the cart 100 and/or the storage box 200. In this manner, the user can mount the item 300 on the storage box 200 or the cart 100, and since the item 300 is mounted in outside space, the item 300 is more convenient for the user to place or take off. The item 300 may be connected to the external hanger 61 through one or a combination of insertion and removal, hanging, snap-fit, attraction, and the like.

The external hanger assembly 60 further includes an intermediate piece 62 capable of mating with the external hanger 61, the external hanger 61 is mounted on the cart 100 and/or the storage box 200 through the intermediate piece 62, and one or more intermediate pieces 62 and one or more external hangers 61 may be provided. The storage box 200, the base plate 11, and the first support plate 21 are each formed with a connection section 63, the connection section 63 is specifically formed at a corner of the storage box, the base plate 11, or the first support plate 21, and a guard rod is embedded in the connection section 63, where the guard rod is made of a metal material. One or more intermediate pieces 62 may be mounted on the connection section 63. The intermediate piece 62 may be connected to the connection section 63 through one or a combination of a screw, a latch, a rivet, and a movable snap. In this example, the intermediate piece 62 is mounted onto the connection section 63 through a screw connection, that is, the intermediate piece 62 is fixed to the connection section 63 by the screw. Of course, it is to be understood that the connection section 63 is formed with a connection surface 631, multiple positioning holes 632 are provided on the connection surface 631, and the intermediate piece 62 is formed with a mounting hole 621. The user may align the mounting hole 621 on the intermediate piece 62 with a corresponding positioning hole 632 as required and then fix the holes with the screw so that the intermediate piece 62 is fixed to the connection section 63. One or more external hangers 61 are detachably mounted to the intermediate piece 62. That is to say, multiple external hangers 61 may all be mounted to the intermediate piece 62. The external hanger 61 may be connected to the intermediate piece 62 through one or a combination of screws, a latch, rivets, and a movable snap. In this example, the external hanger 61 is mounted onto the intermediate piece 62 through screw connections. Multiple external hangers 61 are provided, and the external hanger 61 includes one or a combination of a battery pack hanger, a cable hanger, a scale hanger, a support 64, and a power tool hanger. In this manner, the user may mount necessary items 300 on the storage box 200 or the cart 100 according to an actual working condition. As a feasible example, the user may mount intermediate pieces 62 on two adjacent connection sections 63, connect one end of the support 64 to one intermediate piece 62, and connect the other end of the support 64 to the other intermediate piece 62. The support 64 is provided with multiple slots arranged at intervals, and the user may clamp a tool in a slot with a hook.

The first support plate 21 includes a first surface 211 and a second surface 212 and a third surface 213 located on sidewalls of the first support plate 21. The first surface 211 is recessed downward to form a first recess 214, and the user may place the storage box 200 or directly place the items 300 in the first recess 214. The first surface 211 is also recessed downward to form multiple small recesses 215, and the user may place some small items 300, such as saw blades, drill bits, and screws, in the small recesses 215. The first surface 211 further includes multiple insertion slots 216 recessed downward and configured for placing tools such as screwdrivers. The second surface 212 and the third surface 213 are opposite to each other, the adapter 53 mating with the drive 52 is provided on each of the second surface 212 and the third surface 213, and positioning portions are further provided on the second surface 212 and the third surface 213 so that the user may directly mount, hang, or attract the attachment, the tool, the charging device, the power supply device, the lighting device, and the like on or to the second surface 212 and the third surface 213. The external hanger 61 may be mounted onto the second surface 212 and/or the third surface 213 through one or more of a magnetic member, a screw connection, a snap connection, and a hook connection.

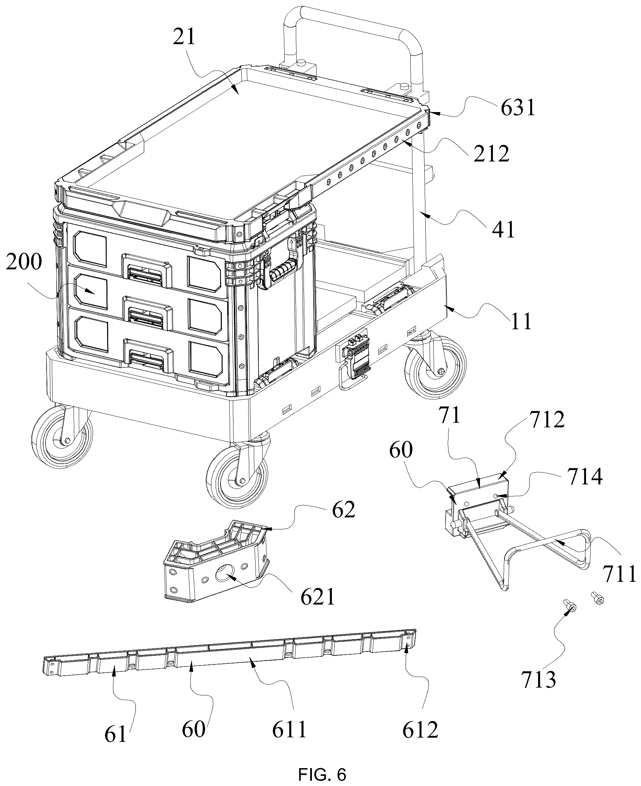

As shown in FIG. 6, as a feasible example, the external hanger assembly 60 further includes one or more external hangers 71 and one or more fasteners 713 for mounting the external hangers 71 to the cart 100, where the fasteners 713 can penetrate through the external hangers 71 and be connected to the first support plate 21. An external hanger 71 includes a connection portion 712 and a mounting portion 711, the mounting portion 711 is configured to detachably connect an item 300, and the connection portion 712 is configured to be connected to fasteners 713 to fixedly connect the external hanger 71 to the first support plate 21. Multiple positioning grooves are provided on the second surface 212 and/or the third surface 213, and the connection portion 712 is provided with holes 714. After the fasteners 713 penetrate through the holes 714, the external hanger 71 is driven to be fixed into positioning grooves where the external hanger 71 is required to be fixed. In this example, the fasteners 713 may be threadedly connected to the positioning grooves, that is, the fasteners 713 may be screws. The external hanger 71 and the external hanger 61 may both be mounted on the cart 100.

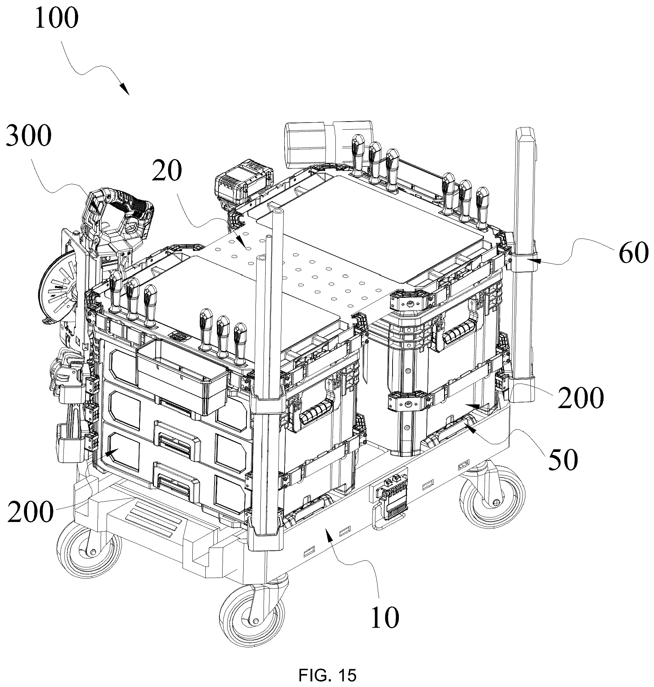

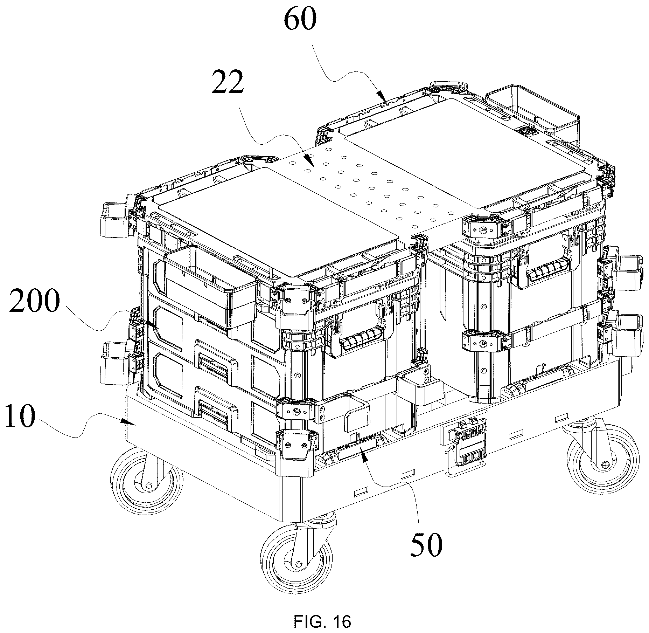

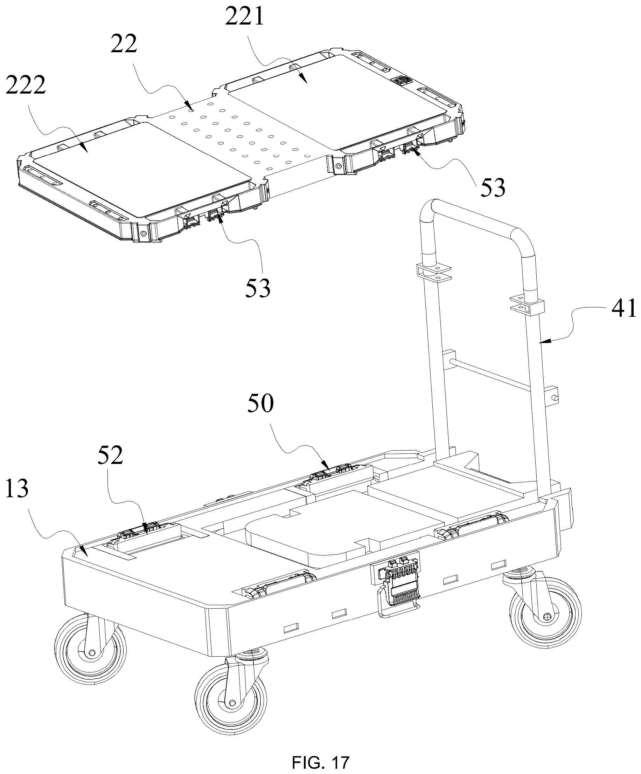

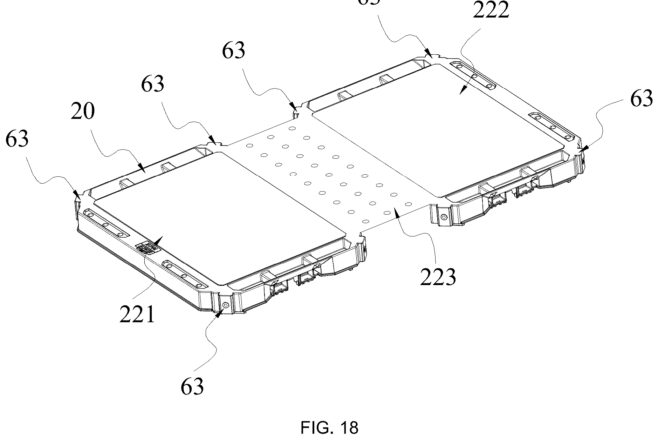

FIGS. 15 to 18 show a first support plate 22 as a second example. It is to be noted that the cart 100, the storage box 200, and the external hanger assembly 60 have substantially the same structures in the second example and the first example, and example two differs from example one only in that the first support plate 22 has a different structure, the first support plate 22 is connected to the cart 100 in a different manner, and the external hanger assembly 60 are mounted at different positions. Differences between example two and example one are described here, and for other structures, reference may be made to the preceding description and the details are not repeated here. During actual use, the user may switch the first support plate 22 in example one and the first support plate 22 in example two between each other as required.

The first support plate 22 may be indirectly connected to the base plate 11 through at least two storage boxes 200 or may be directly connected to the base plate 11 through the second connection assembly 50.

The first support plate 22 specifically includes a first working plate 221, a second working plate 222, and a connecting plate 223 for connecting the first working plate 221 to the second working plate 222. The first working plate 221 and the second working plate 222 are each mounted with the adapter 53 mating with the drive 52.

Two storage boxes 200 are mounted on the base plate 11. Along the up and down direction, each storage box 200 is provided with two sets of connection devices. The storage box 200 has the upper top surface and the lower bottom surface opposite to each other, one set of connection devices may be mounted on the upper top surface of the storage box 200, and one set of connection devices may be mounted on the lower bottom surface of the storage box 200. The adapter 53 may be mounted on the lower bottom surface of the storage box 200, and the drive 52 may be mounted on the base plate 11. The user may connect the storage box 200 to the base plate 11 by connecting the adapter 53 to the drive 52. The drive 52 may be mounted on the upper top surface of the storage box 200, the adapter 53 on the first working plate 221 is connected to the drive 52, and similarly, the adapter 53 on the second working plate 222 is connected to the drive 52 on the other storage box 200, so that the first support plate 22 is mounted to the upper end of the storage boxes 200. In this case, the first support plate 22 is in the first state. In the first state, the cart 100 may have two examples. In one example, the user flips the pull rod 41 out of the lower recess 14 and may push/pull the pull rod 41 to move the cart 100. In the other example, the user stores the pull rod 41 in the lower recess 14 and pushes the base plate 11, the storage box 200, or the first support plate 22 to move the cart 100. In the first state, the user may use the first support plate 22 as a workbench, and the user may place a tool on the first support plate 22 to cut a workpiece or the like on the first support plate 22, or the user may perform operations such as writing and drawing on the first support plate 22.

The first support plate 22 may be directly mounted on the base plate 11, that is, the drive 52 on the base plate 11 is connected to the adapter 53 on the first support plate 22 so that the first support plate 22 is fixed to the base plate 11. In this case, the first support plate 22 is in the second state. Of course, the first support plate 22 may be detached from the base plate 11, and only the base plate 11 is retained. In this case, the first support plate 22 is in the third state.

Connection sections 63 are disposed at four corners of each of the first working plate 221 and the second working plate 222. The user may mount the intermediate piece 62 on the connection section 63 and then mount the external hanger 61 on the intermediate piece. Accessory recesses are provided around the first working plate 221 and the second working plate 222, and the user may place accessories and the like in the accessory recesses.

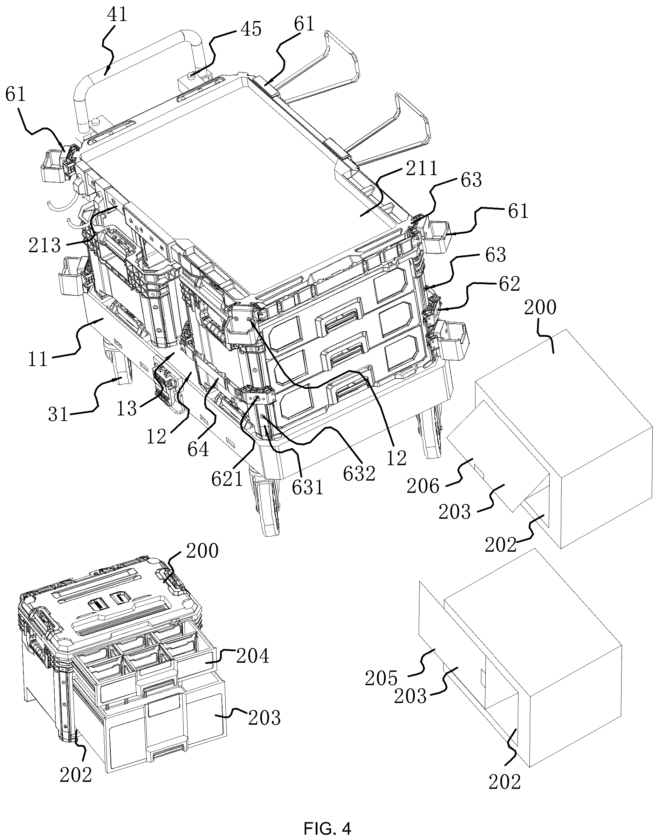

As shown in FIG. 4, in the present application, a sidewall of the storage box 200 may have an opening so that when the user mounts the first support plate 22 on the storage boxes 200 and uses the storage boxes 200 as the support legs between the base plate 11 and the first support plate 22, the user may directly open the sidewall of the storage box 200 when the user needs to take or store an item 300 out of or into the storage box 200, thereby avoiding the case where the user can open the storage box 200 only after the user detaches the first support plate 22 from the storage box 200. At least one cover plate 203 is provided on the sidewall of the storage box 200 to open or close an opening 202, and the cover plate 203 may be slidably connected or rotatably connected to a body of the storage box 200. The slidable connection here may refer to sliding backward and forward or sliding leftward and rightward. The cover plate 203 may be a drawer 204, that is, the storage box 200 may be a drawer box, and the user may pull the drawer 204 out to open the opening 202 of the storage box 200. Alternatively, the cover plate 203 is a sliding door 205 that can be slid leftward and rightward by the user. The user moves the sliding door 205 leftward or rightward to open the opening 202 of the storage box 200. Similarly, the user moves the sliding door 205 leftward or rightward to close the storage box 200. Alternatively, the cover plate 203 may be a flipping plate 206, and the flipping plate 206 may be flipped up and down or flipped left and right relative to the body of the storage box 200 so that if the user wants to open the storage box 200, the user simply rotates the flipping plate 206 to expose the opening 202. The sidewall here refers to a left sidewall, a right sidewall, a front sidewall, and a rear sidewall that form the perimeter of the storage box 200. Additionally, the storage box 200 may be provided with multiple cover plates 203 so that the inside of the storage box 200 is divided into multiple storage spaces, facilitating the storage and management by the user.

As shown in FIG. 3, as a feasible example, the walking assembly 30 further includes an intermediate rod configured to connect two wheels 31. That is to say, the cart 100 includes at least two intermediate rods, which are a first intermediate rod 32 and a second intermediate rod 33, respectively. One intermediate rod connects two wheels 31. The intermediate rod can rotate relative to the base plate 11, and during rotation, the intermediate rod can drive the wheels 31 to rotate together. The base plate 11 is recessed upward from the bottom to form the lower recess 14, the intermediate rod is at least partially accommodated in the lower recess 14, and the wheels 31 can rotate along with the connecting rod into the lower recess 14 during rotation with the intermediate rod. That is to say, the wheels 31 can be completely stored in the lower recess 14. Thus, when the cart 100 is not used, the user can store the wheels 31 in the lower recess 14, facilitating storage and transportation. When the user needs to use the walking function of the cart 100, the user flips the wheels 31 out of the lower recess 14. In this example, the wheels 31 are omni wheels so that when the user pushes or pulls the cart 100, the user can conveniently adjust a direction of the cart 100, facilitating the use of the user. The wheels 31 may be configured with a foot brake.

The cart 100 further includes a locking device 34 capable of mating with the walking assembly 30. Specifically, the locking device 34 is configured to lock the connecting rods so that the wheels 31 can remain in the current state, avoiding state switching due to vibration of the cart 100 during transportation or use. The locking device 34 includes a first lever 341, a second lever 342, an elastic member 343, a first adaption portion 321 and a second adaption portion 322 capable of mating with the first lever 341, a third adaption portion 331 and a fourth adaption portion 332 capable of mating with the second lever 342, and a housing 344. The housing 344 is mounted to the lower end of the base plate 11. In other words, the housing 344 is disposed in the lower recess 14. The first lever 341 and the second lever 342 are at least partially disposed in the housing 344, the elastic member 343 is disposed in the housing 344, one end of the elastic member 343 is connected to the first lever 341, and the other end of the elastic member 343 is connected to the second member. The first adaption portion 321 and the second adaption portion 322 are disposed on the first intermediate rod 32, and the third adaption portion 331 and the fourth adaption portion 332 are disposed on the second intermediate rod 33. The first lever 341 is formed with a first operating portion 347 operable by the user and a first engaging portion 345 capable of mating with the first adaption portion 321 or the second adaption portion 322. The second lever 342 is formed with a second operating portion 348 operable by the user and a second engaging portion 346 capable of mating with the third adaption portion 331 or the fourth adaption portion 332. When the wheels 31 are in the folded state, the first engaging portion 345 is engaged with the first adaption portion 321, and the second engaging portion 346 is engaged with the third adaption portion 331. When the user wants to switch the wheels 31 from the folded state to the unfolded state, the first operating portion 347 and the second operating portion 348 need to be toggled. The first operating portion 347 and the second operating portion 348 are moved towards each other so that the first engaging portion 345 is released from the first adaption portion 321, and the second engaging portion 346 is released from the third adaption portion 331. In this process, the first lever 341 and the second lever 342 press against the elastic member 343. The wheels 31 are rotated until the first engaging portion 345 and the second engaging portion 346 are engaged with the second adaption portion 322 and the fourth adaption portion 332 under the action of the elastic member 343 to keep the wheels 31 in the unfolded state. When the user needs to switch the wheels 31 from the unfolded state to the folded state, the user also toggles the first operating portion 347 and the second operating portion 348 towards each other and then flips the wheels 31 inward until the first engaging portion 345 is engaged with the first adaption portion 321, and the second engaging portion 346 is engaged with the third adaption portion 331.

The first adaption portion 321 and the second adaption portion 322 are specifically two holes formed on the first intermediate rod 32. Similarly, the third adaption portion 331 and the fourth adaption portion 332 are two holes formed on the second intermediate rod 33. The first lever 341 and the second lever 342 are elongated columns and can be inserted into corresponding holes.

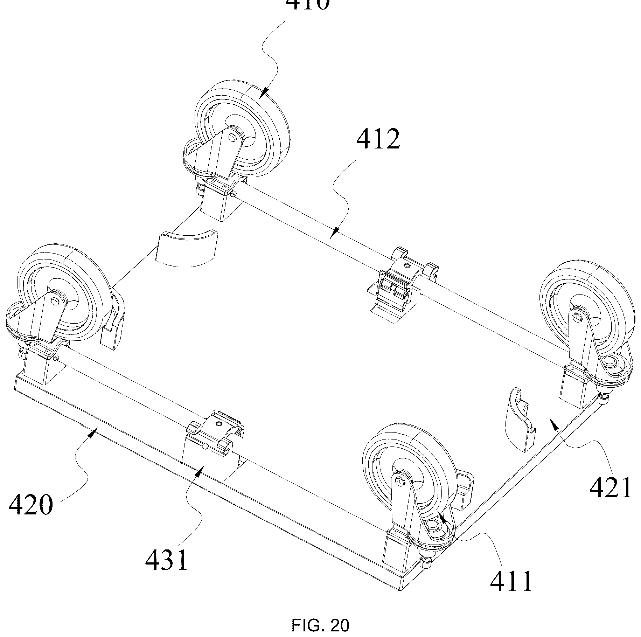

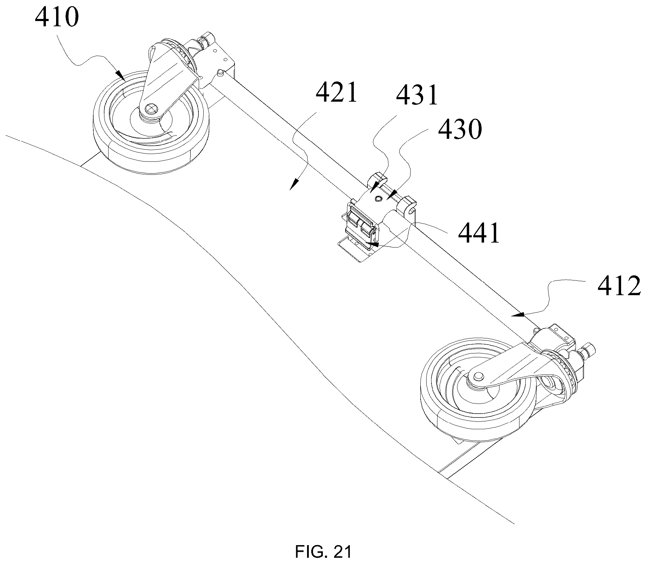

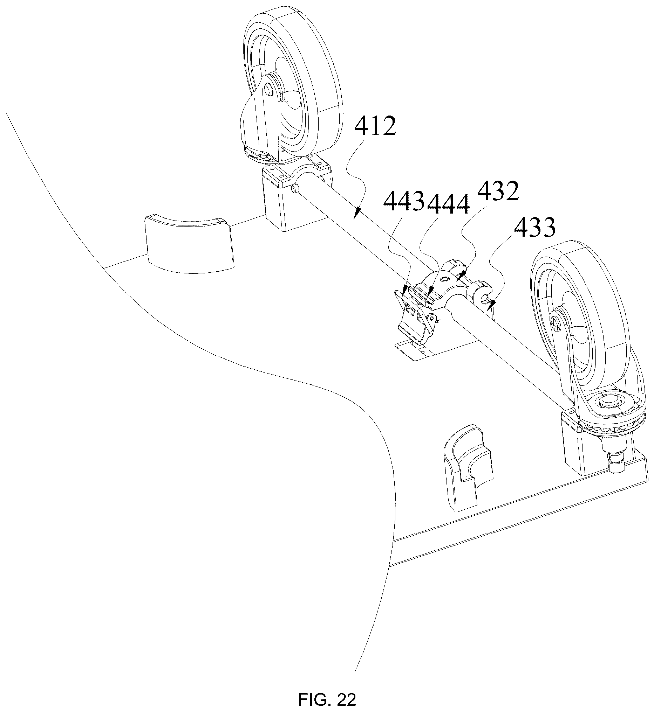

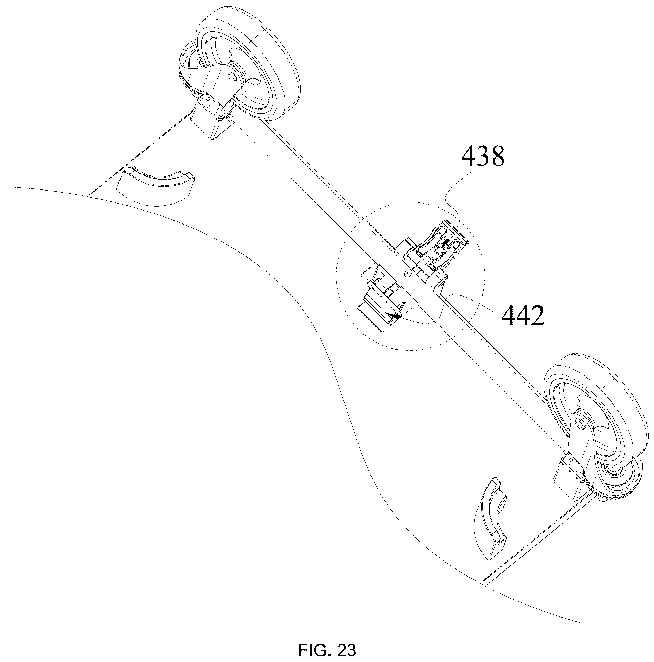

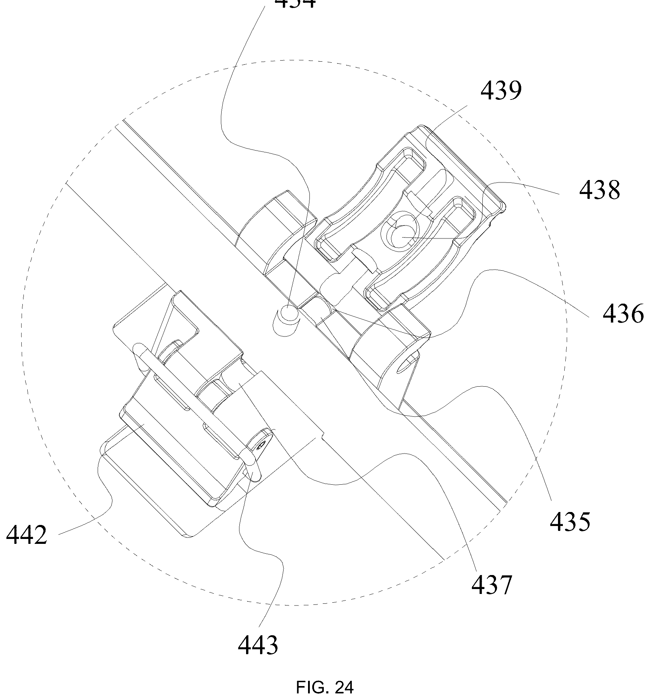

As another specific example of the locking device, as shown in FIGS. 20 to 25, the base plate, the wheels, and the intermediate rods have substantially the same structures as those in the preceding example, and only differences are described below.

As shown in FIGS. 20 to 24, a locking device 430 is configured to control wheels 411 to switch between a traveling state and a folded state, the locking device 430 is at least partially disposed at the lower end of a base plate 421, and the locking device 430 includes a limiting assembly 431 and a locking assembly 441, where the limiting assembly 431 is configured to mate with an intermediate rod 412 to prevent rotation of the intermediate rod 412, and the locking assembly 441 mates with the limiting assembly 431 to fix the intermediate rod 412 in the current state. Under some working conditions, the user needs to use the cart 100 to transport tools from a storage place to a workplace. To reduce the number of times the tools are transported, the user stacks all the tools required for working on the cart 100 as much as possible, resulting in a very heavy load on the cart 100. Moreover, the workplace of the user inevitably has some places with relatively complicated road conditions. A relatively large weight of the cart 100 and uneven roads lead to strong vibrations when the user pushes the cart 100. The wheels 411 tend to be out of the traveling state due to a failure of the wheels 411 to withstand such strong vibrations, and thus the cart 100 cannot be used. The limiting assembly 431 and the locking assembly 441 are disposed so that the wheels 411 can always remain in the traveling state.

The limiting assembly 431 includes an adapter 432 and a base 33, the base 33 is connected to or integrally formed with the base plate 421, and the adapter 432 is connected to the base 33 and rotatable relative to the base 33. In this example, the base 33 is connected to the base plate 421, one end of the adapter 432 is connected to the base 33, the other end of the adapter 432 can be driven to move freely, and the other end of the adapter 432 can be connected to the base 33 during movement. The intermediate rod 412 is at least partially in contact with the base 33, and the intermediate rod 412 is rotatable relative to the base 33. The adapter 432 can be driven to switch between a first state and a second state. When the adapter 432 is in the first state, the adapter 432 is connected to the base 33, and the intermediate rod 412 can only remain at the current position and cannot be rotated, that is, when the adapter 432 is at a first position, the adapter 432 and the base 33 prevent the rotation of the intermediate rod 412. When the adapter 432 is in the second state, only one end of the adapter 432 is connected to the base 33, and the intermediate rod 412 can be driven to rotate relative to the base 33. The locking assembly 441 can mate with the limiting assembly 431 so that the other end of the adapter 432 can be connected to the base 33.

As a feasible example, the limiting assembly 431 includes a cam 442 and a clasp 443, where the cam 442 is rotatably connected to the base 33, the clasp 443 is connected to the cam 442, and the clasp 443 mates with the cam 442 so that one end of the adapter 432 can be connected to the base 33. One end of the adapter 432 is provided with an engaging portion 444 mating with the clasp 443. The clasp 443 has a locking state and a release state relative to the adapter 432. When the clasp 443 is in the locking state, the clasp 443 is connected to the adapter 432, and the clasp 443 applies a force to the adapter 432 and the base 33 so that the adapter 432 and the base 33 remain relatively fixed, the adapter 432 and the base 33 lock the intermediate rod 412, and the intermediate rod 412 cannot rotate since the adapter 432 and the base 33 abut against the intermediate rod 412. When the clasp 443 is in the release state, the clasp 443 is separated from the adapter 432, and the adapter 432 is allowed to be separated from the base 33.

When the user wants to switch the clasp 443 from the locking state to the release state, the cam 442 is driven to rotate upward. During upward rotation of the cam 442, the clasp 443 is driven to move upward, and the force applied to the adapter 432 and the base 33 disappears. Then, the clasp 443 is driven to rotate so that the clasp 443 is separated from the engaging portion 444. At this time, the clasp 443 is switched from the locking state to the release state. After the clasp 443 is separated from the adapter 432, the adapter 432 can be driven to rotate relative to the base 33, and the user can drive the intermediate rod 412 to rotate relative to the base 33. When the user wants to switch the clasp 443 from the release state to the locking state, the clasp 443 is driven to move upward to be in contact with the engaging portion 444, and the clasp 443 is partially sleeved on the adapter 432. Since the clasp 443 is connected to the cam 442, when the clasp 443 is moved upward, the cam 442 is also rotated upward until the clasp 443 is in contact with the engaging portion 444. The cam 442 is driven to rotate downward, and the clasp 443 is driven to move downward until the adapter 432 and the base 33 abut against the intermediate rod 412. At this time, the clasp 443 is in the locking state. When the clasp 443 is in the locking state, the wheels 411 may be in the traveling state or the folded state.

As a feasible example, the limiting assembly 431 further includes a positioning pin, the positioning pin is connected to the intermediate rod 412, and the positioning pin abuts against the adapter 432 after the adapter 432 is rotated by a preset angle. When the positioning pin abuts against the adapter 432, the intermediate rod 412 can only remain in the current state so that the wheels 411 remain in the current state, that is, the wheels 411 remain in the traveling state or the folded state.

Specifically, the limiting assembly 431 includes two positioning pins, which are defined as a first positioning pin 434 and a second positioning pin 435, respectively. The first positioning pin 434 and the second positioning pin 435 are arranged in a circumferential direction of the intermediate rod 412, the first positioning pin 434 and the second positioning pin 435 each penetrate the intermediate rod 412, and one end of the first positioning pin 434 and one end of the second positioning pin 435 each protrude out of the intermediate rod 412. When the wheels 411 are in the traveling state, the first positioning pin 434 abuts against the adapter 432. When the wheels 411 are in the folded state, the second positioning pin 435 abuts against the adapter 432. The positioning pin is disposed on the intermediate rod 412 so that the wheels 411 are prevented from rotation in the traveling state, and the wheels 411 always remain in the current state.

The adapter 432 is formed with an adaption portion 438 mating with the positioning pin. When the positioning pin is in contact with the adaption portion 438, the wheels 411 remain in the current state. When the adaption portion 438 mates with the first positioning pin 434, the wheels 411 are in the traveling state. When the adaption portion 438 mates with the second positioning pin 435, the wheels 411 are in the folded state. The base 33 is formed with a first stop portion 436 and a second stop portion 437 which mate with the positioning pins. The first stop portion 436 and the second stop portion 437 are disposed at two ends of the base 33 one to one. It is to be understood that the first stop portion 436 and the second stop portion 437 are disposed on two sides of the intermediate rod 412. When the wheels 411 are in the traveling state, the first positioning pin 434 is in contact with the adaption portion 438, and the second positioning pin 435 is in contact with the first stop portion 436. When the wheels 411 are in the folded state, the first positioning pin 434 is in contact with the second stop portion 437, and the second positioning pin 435 is in contact with the adaption portion 438. Thus, when the wheels 411 are in the traveling state, the positioning pin mates with the base 33 and the adapter 432 to prevent the rotation of the intermediate rod 412.

The first adapter 432 further includes a guide portion 439 configured to guide the positioning pin to slide into the adaption portion 438. The guide portion 439 is connected to and integrally formed with the adaption portion 438. The adaption portion 438 is specifically a hole formed in the adapter 432, and the guide portion 439 is an inclined arc-shaped surface. Thus, when the intermediate rod 412 is rotated to a corresponding position, the positioning pin is first in contact with the guide portion 439, and the adapter 432 is rotated with the guide portion 439 adjusting a position of the positioning pin until the positioning pin is inserted into the adaption portion 438 under the guide of the guide portion 439.

As a method of use, when the user wants to switch the wheels 411 from the folded state to the traveling state, the clasp 443 is in the locking state, the first positioning pin 434 is in contact with the second stop portion 437, the second positioning pin 435 is in contact with the adaption portion 438, and the adapter 432 is in the first state. The user operates the cam 442 for upward rotation to cancel the force applied by the clasp 443 to the adapter 432 and the base 33. The user rotates the clasp 443 to separate the clasp 443 from the engaging portion 444, and at this time, the adapter 432 is still in the first state. The user rotates the adapter 432 to switch the adapter 432 from the first state to the second state so that the adaption portion 438 is separated from the second positioning pin 435. The user rotates the intermediate rod 412 to separate the first positioning pin 434 from the second stop portion 437. The user continues to rotate the intermediate rod 412 until the first stop portion 436 is in contact with the first positioning pin 434. The user rotates the adapter 432 to make the guide portion 439 on the adapter 432 in contact with the second positioning pin 435. The user continues to rotate the adapter 432 so that the second positioning pin 435 is inserted into the adaption portion 438, and the adapter 432 is in the second state. The user rotates the clasp 443 so that the clasp 443 is sleeved on the engaging portion 444 and then rotates the cam downward so that the cam drives the clasp 443 to move downward until the clasp is in the locking state. The clasp 443 applies a force to the adapter 432 and the base 33, so as to reduce interspace between contact portions of the base 33, the adapter 432, and the intermediate rod 412. Thus, it is ensured that during use of the cart 100, the wheels 411 can always remain in the traveling state and are prevented from switching from the traveling state to the folded state due to the vibrations of the cart 100, and the structural stability of the cart 100 is ensured.

Of course, to ensure the structural stability, another locking device 430 is disposed symmetrically on the other intermediate rod 412, which has substantially the same structure and principle, and the details are not repeated here.

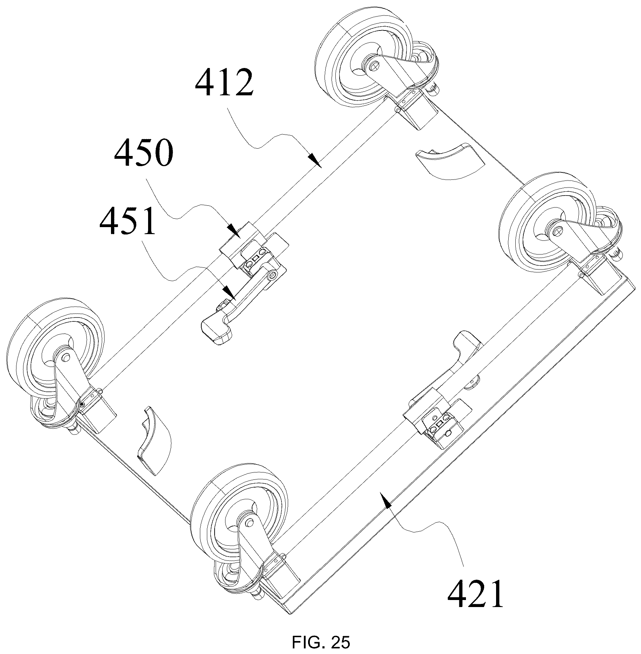

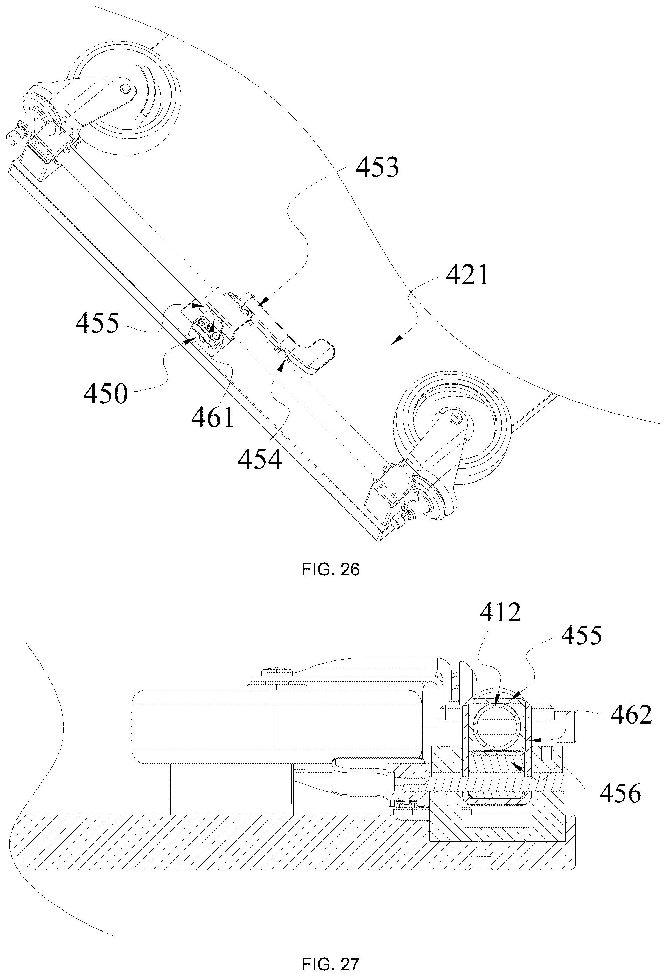

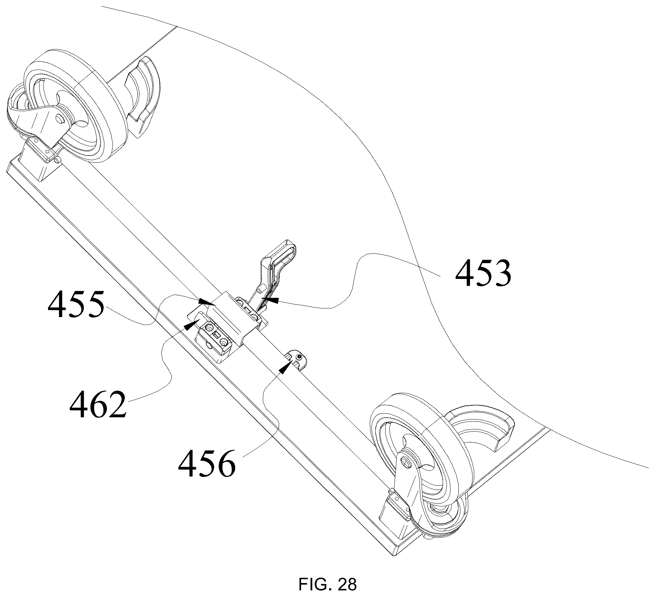

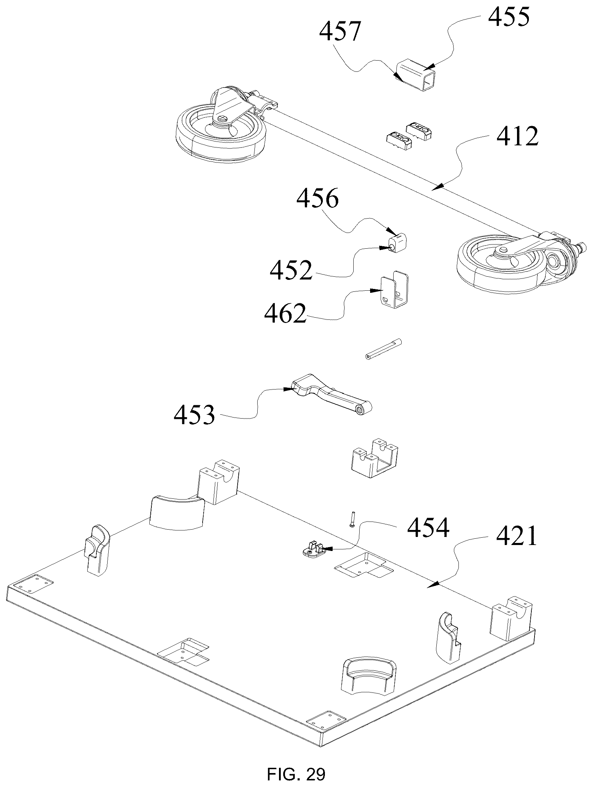

As another specific example of the locking device, as shown in FIGS. 25 to 29, the base plate 421, the wheels 411, and the intermediate rod 412 are substantially the same as those in the preceding example and use the same reference numerals as those in the preceding example.

A locking device 450 is configured to control the wheels 411 to switch between the traveling state and the folded state, the locking device 450 is at least partially disposed at the lower end of the base plate 421, and the locking device 450 includes a locking assembly 451 mating with the intermediate rod 412 to maintain the intermediate rod 412 in the traveling state.

The locking assembly 451 includes an abutting member 452, a handle 453, and a clip 454. The abutting member 452 can be driven to rotate. During rotation of the abutting member 452, the abutting member 452 can mate with the intermediate rod 412. The handle 453 can be driven by the user, and the handle 453 is connected to the abutting member 452, that is, the abutting member 452 can rotate along with the handle 453. The clip 454 is connected to the base plate 421, and the clip 454 is configured to mate with the handle 453 to maintain the handle 453 at the current position. When the clip 454 is separated from the handle 453, the handle 453 can drive the abutting member 452 to rotate.

Additionally, the locking assembly 451 further includes a base, a positioning member 455, and a connection pin, the base is connected to the base plate 421, and the handle 453 and the abutting member 452 are connected to the base through the connection pin so that the handle 453, the connection pin, and the abutting member 452 can rotate synchronously. The positioning member 455 can mate with the abutting member 452 to maintain the intermediate rod 412 at the current position, the positioning member 455 is sleeved on the outer perimeter of the intermediate rod, and the positioning member 455 rotates together with the intermediate rod 412. The positioning member 455 is formed with an adaption portion 457, and the drive is formed with a cam portion 456. During rotation of the abutting member 452, the cam portion 456 is in an interference fit with the adaption portion 457. When the cam portion 456 abuts against the adaption portion 457, the wheels 411 remain in the current state. When the cam portion 456 is separated from the adaption portion 457, the intermediate rod 412 can be driven to rotate.

A cross-section of the positioning member 455 is substantially rectangular. As an example, the positioning member 455 and the intermediate rod 412 are two parts and are mounted to rotate synchronously. As another example, the positioning member 455 and the intermediate rod 412 are integrally formed, that is, a cross-section of the intermediate rod 412 is substantially rectangular. The cam portion 456 is substantially arc-shaped so that when the cam portion 456 abuts against the adapter, an interference area between the abutting member and the positioning member 455 is relatively large, and the structure between the abutting member 452 and the positioning member 455 is more stable.

The locking device 450 further includes a limiting assembly 461 configured to guide the positioning member 455 to rotate to a preset position, thereby facilitating the interference between the abutting member 452 and the positioning member 455. The limiting assembly 461 is connected to the base and can be driven to rotate together with the abutting member 452. The limiting assembly 461 includes a guide member 462 connected to the connection pin and rotating together with the abutting member 452. When the wheels 411 are in the traveling state, the guide member 462 is at least partially in contact with the positioning member 455. Further, when the wheels 411 are in the traveling state, the guide member 462 at least partially overlaps the abutting member 452 in a direction perpendicular to an extension direction of the intermediate rod 412. The guide member 462 is substantially U-shaped. When the wheels 411 are in the traveling state, the positioning member 455 is at least partially disposed between the guide member 462, and the abutting member 452 is located at the lower end of the positioning member 455. That is to say, during rotation, the guide member 462 is in contact with the positioning member 455 prior to the abutting member 452. During rotation of the guide member 462, the guide member 462 is first in contact with the positioning member 455 and guides the positioning member 455 to the preset position, facilitating an interference fit between the abutting member 452 and the positioning member 455.

As a method of use, when the user wants to switch the wheels 411 from the folded state to the traveling state, the handle 453 is engaged with the clip 454, the guide member 462 is at least partially in contact with the positioning member 455, and the abutting member 452 is in the interference fit with the positioning member 455. The user operates the handle 453 to separate the handle 453 from the clip 454 and continues to rotate the handle 453 upward to drive the guide member 462 and the abutting member 452 to rotate downward together so that the abutting member 452 is separated from the positioning member 455, and the guide member 462 is separated from the positioning member 455. The intermediate rod 412 is driven to rotate to the preset position, that is, the wheels 411 are flipped out from the lower end of the base plate 421. Then, the handle 453 is rotated reversely, that is, the handle 453 is rotated downward to drive the guide member 462 and the abutting member 452 to rotate upward together until the guide member 462 is at least partially in contact with the positioning member 455. The handle 453 continues to be rotated upward until the handle 453 is engaged with the clip 454. At this time, the abutting member 452 abuts against the positioning member 455 in an interference fit.

The basic principles, main features, and advantages of the present application are shown and described above. It is to be understood by those skilled in the art that the preceding examples do not limit the present application in any form, and any technical solutions obtained through equivalent substitutions or equivalent transformations are within the scope of the present application.

## Claims

1. A cart applicable to a storage box, comprising:
a walking assembly comprising rotatable wheels;
a base plate assembly comprising a base plate connected to the walking assembly; and
a first support plate having at least a first state relative to the base plate, wherein the first support plate is connected to the base plate through at least one storage box when the first support plate is in the first state.

2. The cart according to claim 1, wherein the first support plate has a second state and a third state relative to the base plate, the first support plate is mounted to the base plate and the first support plate is at least partially in contact with the base plate when the first support plate is in the second state, and the first support plate is separated from the base plate when the first support plate is in the third state.

3. The cart according to claim 2, further comprising a pull rod assembly connected to the base plate assembly, wherein the pull rod assembly comprises a pull rod connected to the base plate, the pull rod is movable relative to the base plate, and the pull rod has at least two states relative to the base plate, which are a stored state and a used state, respectively; the pull rod is at least partially within the base plate and the pull rod is lower than an upper surface of the base plate when the pull rod is in the stored state, and the pull rod is connectable to the first support plate when the pull rod is in the used state.

4. The cart according to claim 3, wherein the pull rod further has a separated state relative to the base plate, and the pull rod is allowed to be separated from the base plate when the pull rod is in the separated state.

5. The cart according to claim 3, wherein three states of the first support plate relative to the base plate are each configured to be used in combination with two states of the pull rod relative to the base plate.

6. The cart according to claim 1, further comprising a pull rod assembly connected to the base plate assembly, wherein the pull rod assembly comprises a pull rod connected to the base plate, and the first support plate is connected to the base plate with an interval through the at least one storage box and the pull rod.

7. The cart according to claim 1, further comprising a pull rod assembly connected to the base plate assembly, wherein the pull rod assembly comprises a pull rod connected to the base plate, the cart further comprises a first connection assembly for connecting the pull rod to the first support plate, the first connection assembly comprises a first connector and a second connector, the first support plate is fixedly connected to the pull rod when the first connector is connected to the second connector, and the first support plate is separated from the pull rod and the first support plate and the pull rod are movable relative to the base plate when the first connector is separated from the second connector.

8. The cart according to claim 7, wherein the first connection assembly further comprises a fastener capable of mating with the first connector and the second connector, the first connector is connected to the pull rod, the second connector is connected to the first support plate, the first connector is formed with first connection holes, the second connector is formed with second connection holes, and the fastener penetrates through the first connection holes and the second connection holes to connect the first support plate to the pull rod.

9. The cart according to claim 1, further comprising a pull rod assembly connected to the base plate assembly, wherein the pull rod assembly comprises a pull rod connected to the base plate and a holder detachably connected to the pull rod.

10. The cart according to claim 1, wherein the first support plate is connected to the base plate through at least two storage boxes.

11. The cart according to claim 1, further comprising a second connection assembly, wherein the storage box is mounted onto the base plate through the second connection assembly.

12. The cart according to claim 11, wherein the first support plate is mounted onto the storage box through the second connection assembly.

13. The cart according to claim 1, further comprising a second connection assembly, wherein the first support plate is connected to the base plate through the second connection assembly.

14. The cart according to claim 1, further comprising at least one external hanger, wherein each of the at least one external hanger comprises a mounting portion and a connection portion, the mounting portion is configured to detachably connect an item, and the connection portion is configured to be mounted onto at least one of the cart or the storage box.

15. The cart according to claim 14, further comprising an external hanger assembly comprising the at least one external hanger and an intermediate piece, wherein an external hanger of the at least one external hanger is mounted onto a connection section of at least one of the storage box or the first support plate through the intermediate piece.

16. The cart according to claim 14, further comprising an external hanger assembly comprising fasteners, wherein the fasteners penetrate through the connection portion to mount an external hanger of the at least one external hanger onto the first support plate.

17. The cart according to claim 14, wherein the item is attractable to an external hanger of the at least one external hanger.

18. The cart according to claim 14, wherein an external hanger of the at least one external hanger is mounted to an outer perimeter of the first support plate.

19. A cart applicable to a storage box, comprising:
a walking assembly comprising rotatable wheels;
a base plate assembly comprising a base plate, wherein the base plate is connected to the walking assembly, and the base plate assembly is at least partially disposed on an upper side of the walking assembly; and
a first support plate, wherein the storage box is detachably connected to the base plate, the first support plate is detachably connected to the base plate through the storage box, and a space for storing items is formed on an upper side of the first support plate.

20. A cart applicable to a storage box, comprising:
a walking assembly comprising rotatable wheels;
a base plate assembly comprising a base plate, wherein the base plate is connected to the walking assembly, and the base plate assembly is at least partially disposed on an upper side of the walking assembly; and
a first support plate connected to the base plate through at least one storage box, wherein the storage box is formed with an opening that is openable and closable.

21. The cart according to claim 1, wherein the walking assembly further comprises an intermediate rod connecting wheels of the rotatable wheels, the wheels are rotated relative to the base plate, and during rotation of the wheels, the wheels have at least a traveling state and a folded state; when the wheels are in the traveling state, the wheels are allowed to drive the base plate to move; and when the wheels are in the folded state, the wheels are stored on a lower side of the base plate;
the cart further comprises a locking device configured to control the wheels to switch between the traveling state and the folded state; and
the locking device comprises:
an adapter connected to the base plate, wherein the adapter comprises an adaption portion, and the adapter is configured to be connected to the intermediate rod after being rotated by a preset angle; and
a positioning pin connected to the intermediate rod, wherein the positioning pin abuts against the adapter after the adapter is rotated by the preset angle, and when the positioning pin abuts against the adaption portion, the wheels remain in a current state.

22. The cart according to claim 21, wherein the locking device further comprises a limiting assembly, the limiting assembly comprises the adapter and a base to which the adapter is rotatably connected, and the base mates with the adapter to prevent rotation of the intermediate rod.

23. The cart according to claim 22, wherein the locking device further comprises a locking assembly, the locking assembly comprises a cam and a clasp, the cam is rotatably connected to the base, the clasp is connected to the cam, and the clasp mates with the cam to enable the adapter to be connected to the base.

24. The cart according to claim 22, wherein the intermediate rod is provided with two positioning pins which are a first positioning pin and a second positioning pin, and the base is provided with a first stop portion and a second stop portion which mate with the positioning pins; when the wheels are in the traveling state, the first positioning pin is in contact with the adaption portion, and the second positioning pin is in contact with the first stop portion; and when the wheels are in the folded state, the first positioning pin is in contact with the second stop portion, and the second positioning pin is in contact with the adapter.

25. The cart according to claim 24, wherein the first positioning pin and the second positioning pin are arranged in a circumferential direction of the intermediate rod.

26. The cart according to claim 24, wherein the intermediate rod is rotated to a preset position, and the adapter is rotated by the preset angle so that the first positioning pin is in contact with the adaption portion and the second positioning pin is in contact with the first stop portion, and a clasp is in contact with and abuts against the adapter, so that the wheels are switched to the traveling state.

27. The cart according to claim 21, wherein the adaption portion is a hole for the positioning pin to partially penetrate through.

28. The cart according to claim 21, wherein the adapter further comprises a guide portion configured to guide the positioning pin to slide into the adaption portion.

29. The cart according to claim 1, wherein the walking assembly further comprises an intermediate rod connecting wheels of the rotatable wheels, the wheels are rotated relative to the base plate, and during rotation of the wheels, the wheels have at least a traveling state and a folded state; when the wheels are in the traveling state, the wheels are allowed to drive the base plate to move; and when the wheels are in the folded state, the wheels are stored on a lower side of the base plate;
the cart further comprises a locking device configured to control the wheels to switch between the traveling state and the folded state; and
the locking device comprises:
an abutting member comprising a cam portion, wherein the abutting member is operated to rotate relative to the base plate, and during rotation, the abutting member abuts against an adaption portion on the intermediate rod to enable the wheels to be in the traveling state.

30. The cart according to claim 29, wherein the locking device further comprises a locking assembly, the locking assembly comprises the abutting member, a handle rotating together with the abutting member, and a clip configured to fix the handle, and the clip is connected to the base plate.

31. The cart according to claim 30, wherein the handle is operated to rotate the abutting member until the cam portion is in contact with the adaption portion, and the handle continues to be rotated so that the handle is connected to the clip to enable the wheels to be switched to the traveling state.

32. The cart according to claim 31, wherein the locking device further comprises a positioning member, the positioning member is sleeved on an outer perimeter of the intermediate rod and rotates together with the intermediate rod, and the positioning member is formed with the adaption portion.

33. The cart according to claim 32, wherein the connection device further comprises a limiting assembly for guiding the intermediate rod to a preset position, the limiting assembly comprises a guide member, the guide member is connected to the abutting member and rotates together with the abutting member, and when the wheels are in the traveling state, the guide member is at least partially in contact with the positioning member.

34. The cart according to claim 32, wherein the connection device further comprises a limiting assembly for guiding the intermediate rod to a preset position, the limiting assembly comprises a guide member, the guide member is connected to the abutting member and rotates together with the abutting member, and when the wheels are in the traveling state, the guide member at least partially overlaps the abutting member in a direction perpendicular to an extension direction of the intermediate rod.

35. The cart according to claim 34, wherein the handle is operated to rotate the guide member and the abutting member, during rotation of the guide member and the abutting member, the guide member is first in contact with the positioning member and guides the intermediate rod to the preset position, the guide member and the abutting member continue to be rotated until the cam portion is in contact with the positioning member, and the handle continues to be rotated so that the handle is connected to the clip to enable the wheels to be switched to the traveling state.
